(19) Europäisches Patentamt
European Patent Office
Office européen des brevets

(11) **EP 2 437 493 A1**

(12) **EUROPEAN PATENT APPLICATION**
published in accordance with Art. 153(4) EPC

(43) Date of publication:
**04.04.2012 Bulletin 2012/14**

(51) Int Cl.:
*H04N 7/173* (2011.01)   *H04N 7/01* (2006.01)
*H04N 7/26* (2006.01)

(21) Application number: **10780457.7**

(22) Date of filing: **19.05.2010**

(86) International application number:
**PCT/JP2010/058422**

(87) International publication number:
**WO 2010/137502 (02.12.2010 Gazette 2010/48)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **27.05.2009 JP 2009127243**

(71) Applicant: **Sony Corporation
Tokyo 108-0075 (JP)**

(72) Inventor: **KURE Yoshinobu
Tokyo 108-0075 (JP)**

(74) Representative: **Müller - Hoffmann & Partner
Patentanwälte
Innere Wiener Strasse 17
81667 München (DE)**

(54) **INFORMATION PROCESSING DEVICE AND METHOD**

(57)    The present invention relates to an information processing device and method whereby low-delay transmission synchronous playback of an image can be realized in a surer manner.

A timestamp control unit 114 of a transmission device 101 performs adjustment of a timestamp value in which smoothing of a transmission rate by a smoothing unit 115 is taken into consideration according to change in a frame rate (frame thinning-out rate or the like) so as to prevent an image from failure during playback at a reception device 102. A synchronization control unit 142 calculates synchronized playback point-in-time using point-in-time corresponding to a timestamp value after updating to which encoded data has been added. The present invention may be applied to an image transmission system, for example.

FIG. 4

EP 2 437 493 A1

**Description**

Technical Field

The present invention relates to an information processing device and method, and specifically relates to an information processing device and method whereby low-delay transmission synchronous playback of an image can be realized in a surer manner.

Background Art

Recently, demand for transmitting multimedia data with low delay via the Internet or another transmission path has increased. For example, there is a so-called telesurgery application for operating, while viewing the scene of surgery transmitted by a moving image from an operating room, a surgical instrument of the operating room thereof from a remote location. With such an application, in order to suppress reduction in operability of the surgical instrument at the remote location, transmission of a moving image with delay below a several-frame interval is required.

In response to such a request, for example, a method has been proposed wherein compression encoding by wavelet transform is performed every several lines of each picture of a moving image as a compressed encoded block (e.g., see PTL 1). With the method according to this PTL 1, compression encoding can be started without waiting until all of data within a picture is input. In other words, in the event that compressed data is transmitted by a network and is decoded on the reception side, decoding processing can be started before all of data within a picture is received. Accordingly, if network propagation delay is sufficiently small, real-time moving image transmission with low delay below a frame interval (low-delay transmission) can be performed.

With regard to data transmission technology, as an example of such Internet technology adapted to real-time moving image transmission (low-delay transmission) for transmitting a moving image obtained or generated by a capture device or the like while encoding this image, there is RTP (Realtime Transport Protocol) stipulated by IETF (Internet Engineering Task Force) RFC (Request for Comments) 3550. With data transfer according to the RTP, a timestamp is appended to a packet as time information beforehand, and thus, temporal relation between the transmission side and the reception side is recognized. Thus, playback synchronized (synchronous playback) without receiving influence of delay fluctuation (jitter) of packet transfer can be performed.

Note that transmission band is not guaranteed with transmission via the Internet, so rate control processing as shown in, for example, IETF RFC3448 "TCP (Transmission Control Protocol) Friendly Rate Control (TFRC): Protocol Specification" enables processing for adjusting a transmission rate to the optimal rate while monitoring the congestion degree of the network.

Incidentally, with transmission of moving image data, it is necessary to dynamically adjust the encoding rate of a moving image to a specified rate calculated by a rate control mechanism. Examples of an encoding rate adjustment method include image quality, frame rate, and resolution. Which method is desirable for adjusting the encoding rate depends on an application or the like. For example, in the event that the image size (resolution) of an image is relatively great and fixed, and a low rate is specified as to the resolution thereof by rate control, adjustment for the frame rate may cause a user to sense high quality as compared to adjustment for an image quality setting value. In such a case, it is desirable to perform adjustment for the encoding rate by frame rate adjustment.

Low-delay transmission means to start transmission (after encoding) before all of data of each picture of a moving image are captured by a capture device to perform data transmission with delay below a frame interval. Also, synchronous playback means to decode and play, while a reception device receives data transmitted from a transmission device, the data thereof to perform synchronized image display (output). That is to say, low-delay transmission synchronous playback means that the transmission device and reception device perform these operations.

For example, let us consider a case where according to the compression encoding and decoding methods described in PTL 1, the transmission device subjects captured moving image data to compression encoding, and transmits this to the reception device, and the reception device decodes the data thereof to play the image (a case to perform the low-delay transmission synchronous playback). As described above, compression encoding units (compressed encoded block) are sub-picture units.

The compressed encoded block data compressed encoded and generated at the transmission device is divided into multiple packets to which a timestamp value synchronized with the capture point-in-time of input image data is added. The reception device performs synchronous playback of an image based on the timestamp value added to each packet.

The capture point-in-time mentioned here indicates point-in-time when the first data of each compressed encoded block was input in the event that uncompressed moving image data captured by a capture device is input to a compression encoding module of the transmission device via a serial interface, for example, such as an HD-SDI (High Definition Serial Digital Interface) or the like. That is to say, different capture point-in-time (i.e., timestamp value) is taken for each compressed encoded block even within the same frame.

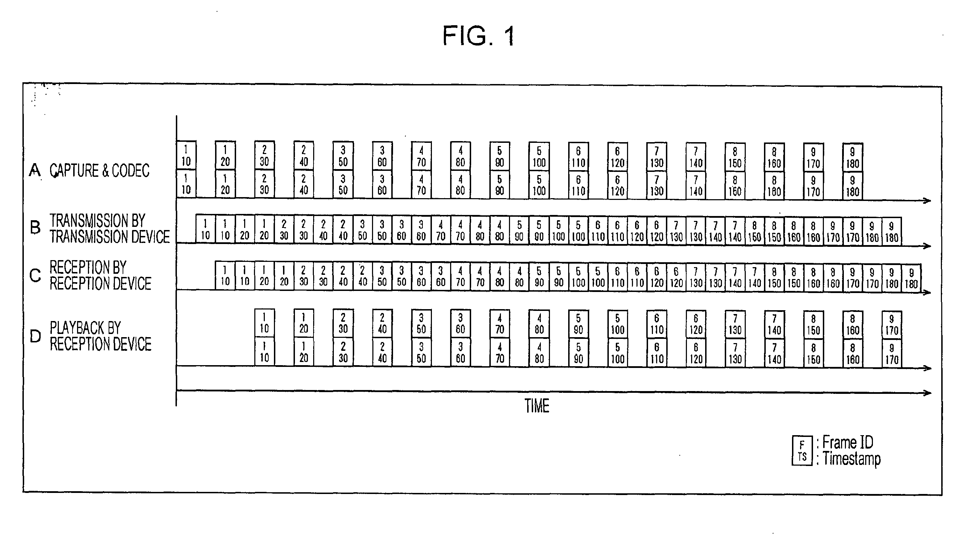

Fig. 1 illustrates a time chart example in the event that dynamic change of the frame rate is not performed, and transmission is performed with the sampling frame rate. In Fig. 1, let us assume that processing is performed beginning at the top. Specifically, first, capture & CODEC (A in Fig. 1) is performed, and next, transmission by the transmission device is performed (B in Fig. 1), and subsequently, reception by the reception device (C in Fig. 1) is performed, and finally, playback by the reception device (D in Fig. 1) is performed. Also, let us assume that a direction from the left toward the right indicates time sequence. Further, a square mark represents the processing point-in-time of each packet, and the upper numeral within the square mark indicates a frame ID, i.e., a consecutive number for each frame, and the lower numeral indicates a timestamp value. Also, let us assume that each frame is made up of four packets, and two compressed encoded blocks. A timestamp value is set by being incremented by 10 counts for each compressed encoded block.

In such a case, frame rate conversion is not performed, so as illustrated in Fig. 1, at playback point-in-time in playback by the reception device (D in Fig. 1) to be performed with playback interval (playback frame rate) of the same interval as an capture interval (capture frame rate) in capture & CODEC (A in Fig. 1), packets necessary for playback have already been received. That is to say, in this case, the reception device can perform synchronous playback in playback by the reception device (D in Fig. 1).

Citation List

Patent Literature

PTL 1: Japanese Unexamined Patent Application Publication No. 2007-311924

Summary of Invention

Technical Problem

However, in the event that the transmission device converts the frame rate of image data into a frame rate lower than the sampling frame rate, and transmits the image data, smoothing of a transmission rate is performed by the transmission device or transmission relay device (so-called router) or the like. Accordingly, there is a concern that time necessary for transmission of all of data of each picture may differ depending on the frame rate after conversion. Thus, there is a concern that in the event of dynamically changing the frame rate, a problem may be caused regarding synchronous playback at the reception device.

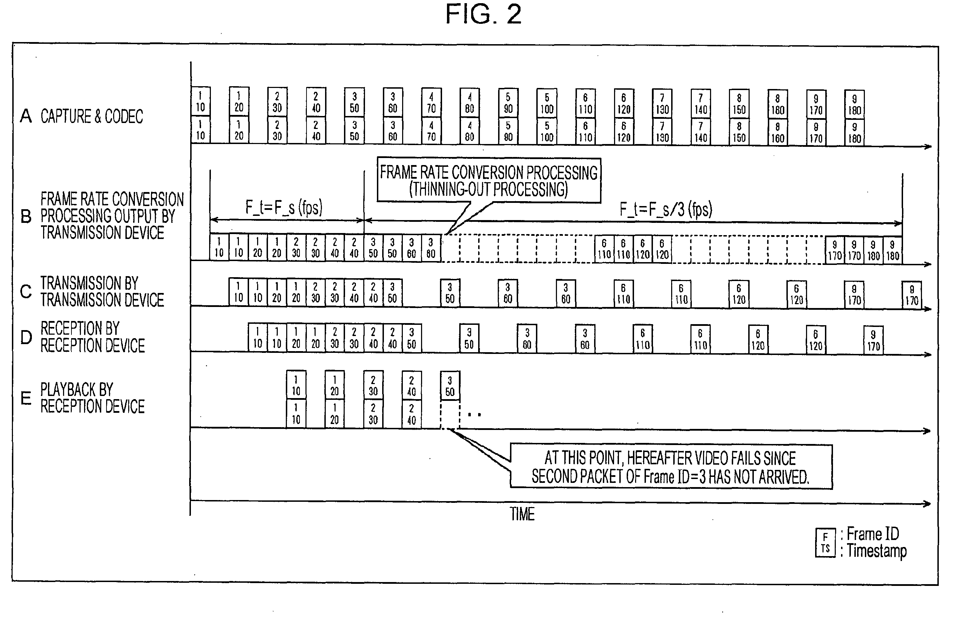

Fig. 2 is a diagram illustrating a time chart example in the event that the frame rate is dynamically converted. The flow of the processing is basically the same as with the case of Fig. 1, but in this case, as illustrated in B in Fig. 2, transmission device frame rate conversion processing output is performed at the transmission device, a part of frames are thinned out at a frame number (Frame ID) 3 and thereafter, and the frame rate is converted to one third.

Also, smoothing of the transmission rate is performed before transmission by the transmission device (C in Fig. 2), and the packet interval of a portion subjected to frame rate conversion is longer than the packet interval before frame rate conversion thereof.

In this case, the packet interval of reception by the reception device (D in Fig. 2) is changed in the same way as transmission by the transmission device (C in Fig. 2). Accordingly, with playback by the reception device (E in Fig. 2), if we say that playback is started at the point of the first compressed encoded block data being received, and thereafter, synchronous playback is performed in accordance with the difference value as to the timestamp of the first packet, at the time of playback of the first compressed encoded block of a frame number (Frame ID) 3, the compressed encoded block of the frame number (Frame ID) 3 is not aligned, so there is a concern that an imperfect video picture may be played. That is to say, there is a concern that the video picture might fail, and accordingly synchronous playback may not be realized.

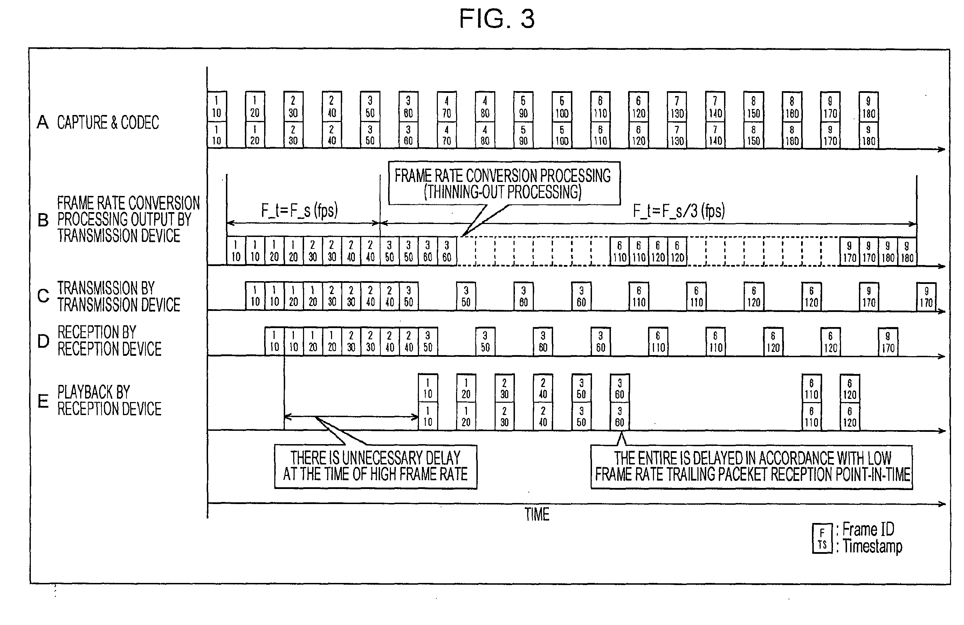

In order to avoid occurrence of such failure, for example, as illustrated in Fig. 3, a method can be conceived wherein the reception device performs synchronous playback so as to assume the transmission time of picture data in the event that the frame rate is the minimum, and to save the received data of the sufficient data amount as to the transmission time thereof in a buffer.

Fig. 3 is a diagram illustrating a time chart example in this case. With an example in Fig. 3 as well, in the same way as with the case in Fig. 2, the frame rate is dynamically converted on the transmission device side. In response to such dynamic conversion of the frame rate, the reception device buffers received data to play this as illustrated in playback by the reception device (E in Fig. 3), and predetermine delay time is provided. Thus, the first compressed encoded block playback point-in-time of the frame number (Frame ID) 3 is delayed as compared to the cased in Fig. 2, so the compressed encoded block data of the frame number (Frame ID) 3 is aligned, and failure is suppressed.

However, in this case, like the frame number (Frame ID) 1 or 2, when the frame rate is high, unnecessary delay occurs, so there is a concern that sufficient low delay may be lost.

The present invention has been proposed in light of such a situation, and its object is to realize low-delay transmission synchronous playback of an image in a surer manner.

Solution to Problem

A first aspect of the present invention is an information processing device including: frame rate conversion means configured to convert the frame rate of moving image data with a timestamp in sync with sampling point-in-time being assigned to each frame; updating means configured to update the timestamp of each frame after the frame rate conversion to a point-in-time between after the frame rate conversion and a timestamp before updating of the next frame, in accordance with frame conversion by the frame rate conversion means; and transmission means configured to transmit the moving image data of which the timestamp has been updated by the updating means to another information processing device configured to determine the playback point-in-time of each frame based on the timestamp.

The updating means may update the timestamp of each frame after the frame rate conversion to the timestamp of a frame positioned one frame before as viewed from the next frame after the frame rate conversion in a state before the frame rate conversion.

The frame rate conversion means may convert the frame rate into a desired frame rate by thinning out part of frame data from the moving image data.

The frame rate conversion means may convert the frame rate into a desired frame rate by subjecting a plurality of frames of the moving image data to image synthesizing.

The frame rate conversion means may convert the frame rate of moving image data with an ID value in sync with the sapling point-in-time of each frame being assigned for each of predetermined data units; with the updating means updating the ID value after the frame rate conversion according to frame rate conversion by the frame rate conversion means; and with the transmission means transmitting the moving image data with the ID value being updated by the updating means to another information processing device configured to determine the playback point-in-time of each frame based on the ID value.

The first aspect of the present invention is also an information processing method including: converting, with frame rate conversion means, the frame rate of moving image data with a timestamp in sync with sampling point-in-time being assigned to each frame; updating, with updating means, the timestamp of each frame after frame rate conversion to a point-in-time between after the frame rate conversion and a timestamp before updating of the next frame in accordance with frame conversion; and transmitting, with transmission means, the moving image data of which the timestamp has been updated to another information processing device configured to determine the playback point-in-time of each frame based on the timestamp.

A second aspect of the present invention is an information processing device including: frame rate conversion means configured to convert the frame rate of moving image data with a timestamp in sync with sampling point-in-time being assigned to each frame; adding means configured to add frame information that is information, which includes at least any one of a frame rate after frame rate conversion by the frame rate conversion means, and a frame skip count indicating the number of frames eliminated through frame rate conversion by the frame rate conversion means, for determining the frame rate conversion, to the moving image data subjected to the frame rate conversion by the frame rate conversion means; and transmission means configured to transmit the moving image data to which the frame information has been added by the adding means to another information processing device configured to determine the playback point-in-time of each frame based on the timestamp, the sampling rate of the moving image data, and the frame rate after frame rate conversion included in the frame information, or the frame skip count.

The frame rate conversion means may convert the frame rate of moving image data with an ID value in sync with the sampling point-in-time of each frame being assigned for each of predetermined data units; with the transmission means transmitting the moving image data to which the frame information has been added by the adding means to another information processing device configured to determine the playback point-in-time of each frame based on the ID value, the sampling rate of the moving image data, and the frame rate after frame rate conversion included in the frame information, or the frame skip count.

The second aspect of the present invention is also an information processing method including: converting, with frame rate conversion means, the frame rate of moving image data with a timestamp in sync with sampling point-in-time being assigned to each frame; adding, with adding means, frame information that is information identifying the frame rate conversion, which includes at least any one of a frame rate after frame rate conversion, and a frame skip count indicating the number of frames eliminated by frame rate conversion, to the moving image data subjected to the frame rate conversion; and transmitting, with transmission means, the moving image data to which the frame information has been added to another information processing device configured to determine the playback point-in-time of each frame based on the timestamp, the sampling rate of the moving image data, and the frame rate after frame rate conversion, or the frame skip count included in the frame information.

A third aspect of the present invention is an information processing device including: reception means configured to receive moving image data to which frame information that is information, which includes a timestamp in sync with the sampling point-in-time of each frame, transmitted from another information processing device, and at least any one of a frame rate after frame rate conversion performed by the other information processing device, and a frame skip count indicating the number of frames eliminated by frame rate conversion, for determining the frame rate conversion, has been added; and playback point-in-time determining means configured to determine the playback point-in-time of each frame of the moving image data received by the reception means using the timestamp, the sampling rate of the moving image data, and the frame rate after frame rate conversion, or the frame skip count included in the frame information.

The playback point-in-time determining means may divide a value obtained by subtracting 1 from the integer value of a quotient obtained by dividing the sampling rate by the framed rate included in the frame information, by the sampling rate to determine point-in-time delayed for the division result worth from playback point-in-time calculated from the timestamp to be the playback point-in-time.

The playback point-in-time determining means may determine point-in-time delayed for division result worth by dividing the frame skip count included in the frame information by the sampling frame rate of the moving image data, from playback point-in-time calculated from the timestamp to be the playback point-in-time.

The reception means may receive moving image data to which an ID value for each of predetermined data units in sync with the sampling point-in-time of each frame, and the frame information, transmitted from another information processing device, have been added; with the playback point-in-time determining means determining the playback point-in-time of each frame of the moving image data received by the reception means using the ID value, the sampling rate of the moving image data, and the frame rate after frame rate conversion, or the frame skip count included in the frame information.

The third aspect of the present invention is also an information processing method including: receiving, with reception means, moving image data to which frame information that is information, which includes a timestamp in sync with the sampling point-in-time of each frame, transmitted from another information processing device, and at least any one of a frame rate after frame rate conversion performed by the other information processing device, and a frame skip count indicating the number of frames eliminated by frame rate conversion, for determining the frame rate conversion, has been added; and determining, with playback point-in-time determining means, the playback point-in-time of each frame of the moving image data received using the timestamp, the sampling rate of the moving image data, and the frame rate after frame rate conversion, or the frame skip count included in the frame information.

With the first aspect of the present invention, the frame rate of moving image data is converted with a timestamp in sync with sampling point-in-time being assigned to each frame, the timestamp of each frame after frame rate conversion is updated to a point-in-time between after the frame rate conversion and a timestamp before updating of the next frame, and the moving image data of which the timestamp has been updated is transmitted to another information processing device configured to determine the playback point-in-time of each frame based on the timestamp.

With the second aspect of the present invention, the frame rate of moving image data is converted with a timestamp in sync with sampling point-in-time being assigned to each frame, frame information that is information identifying said frame rate conversion, which includes at least any one of a frame rate after frame rate conversion, and a frame skip count indicating the number of frames eliminated by frame rate conversion, is added to the moving image data subjected to the frame rate conversion, and the moving image data to which the frame information has been added is transmitted to another information processing device configured to determine the playback point-in-time of each frame based on the timestamp, the sampling rate of the moving image data, and the frame rate after frame rate conversion, or the frame skip count included in the frame information.

With the third aspect of the present invention, moving image data to which frame information that is information, which includes a timestamp in sync with the sampling point-in-time of each frame, transmitted from another information processing device, and at least any one of a frame rate after frame rate conversion performed by the other information processing device, and a frame skip count indicating the number of frames eliminated by frame rate conversion, for determining the frame rate conversion, has been added is received, and the playback point-in-time of each frame of the moving image data received is determined using the timestamp, the sampling rate of the moving image data, and the frame rate after frame rate conversion, or the frame skip count included in the frame information. Advantageous Effects of Invention

According to the present invention, information can be processed. In particular, low-delay transmission synchronous playback of an image can be realized in a surer manner.

Brief Description of Drawings

[Fig. 1] Fig. 1 is a diagram for describing an example of timing when each process in data transmission is executed in the event of performing no frame rate conversion.

[Fig. 2] Fig. 2 is a diagram for describing an example of timing when each process in data transmission is conventionally executed in the event of performing frame rate conversion.

[Fig. 3] Fig. 3 is a diagram for describing another example of timing when each process in data transmission is conventionally executed in the event of performing frame rate conversion.

[Fig. 4] Fig. 4 is a block diagram illustrating a configuration example of an information processing system to which the present invention has been applied.

[Fig. 5] Fig. 5 is a flowchart for describing an example of the flow of rate control processing.

[Fig. 6] Fig. 6 is a flowchart for describing an example of the flow of transmission processing.

[Fig. 7] Fig. 7 is a diagram illustrating an example of relationship between a transmission rate and a frame rate.

[Fig. 8] Fig. 8 is a flowchart for describing an example of the flow of reception processing.

[Fig. 9] Fig. 9 is a diagram for describing an example of timing when each process in data transmission is executed in the event of applying the present invention.

[Fig. 10] Fig. 10 is a block diagram illustrating a configuration example of an encoding unit to which the present invention has bee applied.

[Fig. 11] Fig. 11 is an outline diagram for schematically describing wavelet transform.

[Fig. 12] Fig. 12 is an outline diagram for schematically describing wavelet transform.

[Fig. 13] Fig. 13 is an outline diagram illustrating an example wherein filtering by lifting of a $5 \times 3$ filter has been executed up to division level = 2.

[Fig. 14] Fig. 14 is an outline diagram schematically illustrating the flows of wavelet transform and wavelet inverse transform according to the present invention.

[Fig. 15] Fig. 15 is a block diagram illustrating a configuration example of a decoding unit to which the present invention has been applied.

[Fig. 16] Fig. 16 is a flowchart for describing an example of the flow of encoding processing.

[Fig. 17] Fig. 17 is a flowchart for describing an example of the flow of decoding processing.

[Fig. 18] Fig. 18 is an outline diagram schematically illustrating an example of the way in which parallel operation is performed by each element of the encoding unit and the decoding unit.

[Fig. 19] Fig. 19 is a block diagram illustrating another configuration example of the information processing system to which the present invention has been applied.

[Fig. 20] Fig. 20 is a flowchart for describing another example of the flow of the transmission processing.

[Fig. 21] Fig. 21 is a diagram for describing the way in which addition of a transmission frame rate is performed.

[Fig. 22] Fig. 22 is a flowchart for describing another example of the flow of the reception processing.

[Fig. 23] Fig. 23 is a diagram for describing another example of timing when each process in data transmission is executed in the event of applying the present invention.

[Fig. 24] Fig. 24 is a block diagram illustrating yet another configuration example of the information processing system to which the present invention has been applied.

[Fig. 25] Fig. 25 is a flowchart for describing yet another example of the flow of the transmission processing.

[Fig. 26] Fig. 26 is a diagram for describing the way in which addition of a frame skip count is performed.

[Fig. 27] Fig. 27 is a flowchart for describing yet another example of the flow of the reception processing.

[Fig. 28] Fig. 28 is a diagram for describing yet another example of timing when each process in data transmission is executed in the event of applying the present invention.

[Fig. 29] Fig. 29 is a block diagram illustrating a principal configuration example of a personal computer to which the present invention has been applied.

Description of Embodiments

Hereafter, modes for implementing the present invention (hereafter, referred to as embodiments) will be described. Note that description will be made in the following sequence.

1. First Embodiment (Updating of Timestamp)
2. Second Embodiment (Encoding Processing and Decoding Processing)
3. Third Embodiment (Providing of Frame Rate Information)
4. Fourth Embodiment (Providing of Frame Skip Count)

5. Fifth Embodiment (Personal Computer)

1. First Embodiment

Configuration of Devices

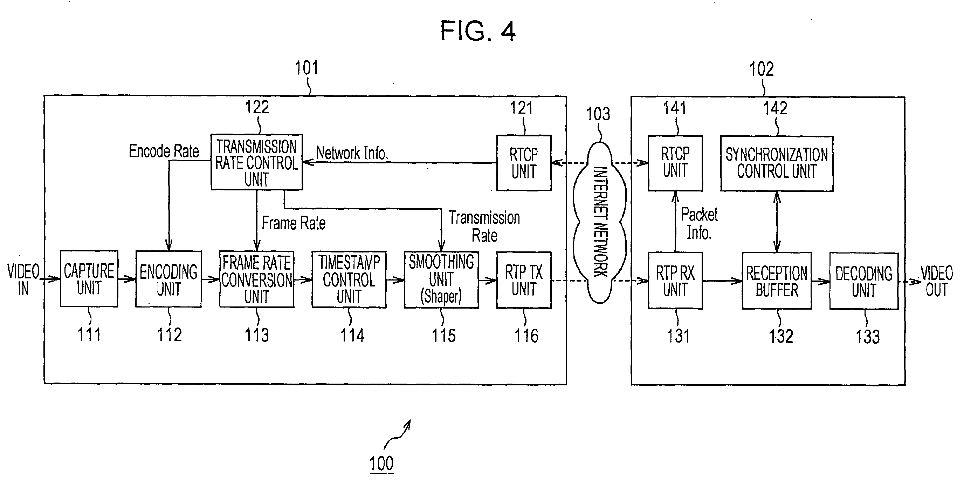

Fig. 4 is a block diagram illustrating a configuration example of an information processing system to which the present invention has been applied.

In Fig. 4, an information processing system 100 is a system for performing low-delay transmission synchronous playback of a moving image from a transmission device 101 to a reception device 102 via an Internet network 103. Specifically, the transmission unit 101 encodes a captured moving image, and transfers the obtained encoded data to the reception device 102 via the Internet network 103. The reception device 102 receives and decodes the encoded data thereof, and synchronously plays the moving image.

The transmission device 101 encodes image data by a low-delay encoding method. The reception device 102 decodes the coded data by a low-delay decoding method corresponding to the encoding method thereof. Also, the transmission device 101 dynamically changes the frame rate of the image data according to the band of a transmission path. The reception device 102 plays the image data with the frame rate changed by the transmission device 101 thereof (performs synchronous playback).

At this time, the reception device 102 adjusts the playback timing of each frame in accordance with the shift of transmission timing caused due to smoothing of a transmission rate so as to prevent an image to be played from failing even at a low frame rate portion.

The transmission device 101 includes a capture unit 111, an encoding unit 112, a frame rate conversion unit 113, a timestamp control unit 114, a smoothing unit (shaper) 115, an RTP transmission unit (RTP TX) 116, an RTCP (RTP Control Protocol) unit 121, and a transmission rate control unit 122.

The capture unit 111 captures a moving image (video IN) input to the transmission unit 101 with a predetermined frame rate, and supplies the data thereof to the encoding unit 112. The encoding unit 112 encodes the image data supplied from the capture unit 111, by a predetermined encoding method, with an encoding rate (Encode Rate) specified by the transmission rate control unit 122. At this time, the encoding unit 112 calculates a timestamp value in sync with capture point-in-time regarding each piece of the encoded data of encoding units. This timestamp value is referenced at the time of moving image playback by the reception device.

With the present configuration example, capture point-in-time indicates point-in-time when the first data of each encoded block was input in the event that uncompressed moving image data captured by a capture device is input to the encoding unit 112 of the transmission device 101 via a serial interface such as an HD-SDI (High Definition Serial Digital Interface) or the like. That is to say, there may be multiple encoded blocks of mutually different capture point-in-time within the same frame. It goes without saying that the setting units of the timestamp are arbitrary, so the timestamp may be set for each encoded block that is encoding processing units, the timestamp may be set in increments of frames, or the timestamp may be set for every multiple frames.

The encoding unit 112 packetizes the encoded data obtained by encoding the image data, so as to obtain a RTP packet, adds the calculated timestamp value to the RTP packet as the RTP timestamp, and supplies to the frame rate conversion unit 113.

The frame rate conversion unit 113 converts the frame rate of the encoded data supplied from the encoding unit 112 into the frame rate (Frame Rate) specified by the transmission rate control unit 122, for example, by thinning out a part of the frames (of the encoded data), or the like. The frame rate conversion unit 113 converts the frame rate by image synthesizing processing such as thinning-out processing, addition average processing, or the like. The frame rate conversion unit 113 supplies the encoded data of which the frame rate has been converted to the timestamp control unit 114.

Note that, in the event that the frame rate specified by the transmission rate control unit 122 is the same as the frame rate before conversion (the sampling rate of the capture unit 111), the frame rate conversion unit 113 omits the conversion processing, and supplies the encoded data to the timestamp control unit 114.

The timestamp control unit 114 adjusts the timestamp value (RTP timestamp) according to change in the frame rate (the thinning-out rate of the frames, or the like). The reception device 102 performs, at the point-in-time according to this timestamp value, playback of the data thereof, which will be described later. The timestamp control unit 114 updates the timestamp value to a value such that the image does not fail due to this playback, according to need. After performing adjustment of the timestamp value, the timestamp control unit 114 supplies the packet of the encoded data to the smoothing unit 115.

The smoothing unit 115 smoothes the transmission rate of the packet to obtain the transmission rate specified by the transmission rate control unit 122. Specifically, the smoothing unit 115 temporarily holds the packet supplied from the timestamp control unit 114, and supplies the packet to the RTP transmission unit 116 at predetermined timing (with a predetermined time interval) such that the transmission rate of the packet becomes the transmission rate (Transmission Rate) specified by the transmission rate control unit 122.

The RTP transmission unit 116 transmits the packet supplied from the smoothing unit 115 to the reception device 102 via the Internet network 103.

The RTCP unit 121 performs communication with the RTCP unit 141 of the reception device 102 via the Internet network 103 to obtain network state information for confirming the useable band with of the Internet network 103, or the like. The RTCP unit 121 exchanges the network state information with the RTCP unit 141, for example, by transmitting/receiving the RTCP Sender Report (SR) packet, RTCP Receiver Report (RR) packet according to the IETF RFC 3550. Any kind of information may be included in this network state information as long as the information relating to communication of the Internet network 103. For example, two-way transmission delay (so-called RTT (Round Trip Time)), packet loss rate, or the like may be included. It goes without saying that other parameters may be included. The RTCP unit 121 supplies the network state information thus exchanged, to the transmission rate control unit 122.

The transmission rate control unit 122 determines an encoding rate of encoding processing, a frame rate after frame rate conversion, a transmission rate of packets, and so forth based on the network state information supplied from the RTCP unit 121. The transmission rate control unit 122 supplies the encoding rate to the encoding unit 112, supplies the frame rate to the frame rate conversion unit 113, and supplies the transfer rate to the smoothing unit 115.

The reception device 102 includes an RTP reception (RTP RX) unit 131, a reception buffer 132, a decoding unit 133, an RTCP unit 141, and a synchronization control unit 142.

The RTP reception unit 131 performs communication with the transmission device 101 via the Internet network 103, receives the packet transmitted from the RTP transmission unit 116, and supplies this to the reception buffer 132. Also, the RTP reception unit 131 supplies information (Packet Info) relating to the reception status of the packet to the RTCP unit 141.

The reception buffer 132 holds the packet supplied from the RTP reception unit 131. The reception buffer 132 extracts encoded data from the packet at predetermined timing to supply this to the decoding unit 133 under the control of the synchronization control unit 142.

The decoding unit 133 decodes the encoded data supplied from the reception buffer 132 by the method corresponding to the encoding method of the encoding unit 112, and outputs (plays) the image data of the obtained base band at the playback point-in-time (synchronous playback point-in-time) determined by the synchronization control unit 142.

The RTCP unit 141 exchanges the network state information with the RTCP unit 121 of the transmission device 101 via the Internet network 103. For example, the RTCP unit 141 supplies network state information including information relating to the reception state of the packet supplied from the RTP reception unit 131, and so forth to the RTCP unit 121 as the network state information.

The synchronization control unit 142 determines the synchronous playback point-in-time of the encoded data of the encoding units held in the reception buffer 132. The synchronization control unit 142 calculates synchronous playback point-in-time using the point-in-time corresponding to the timestamp value of the encoded data. The synchronization control unit 142 supplies the synchronous playback point-in-time thus calculated to the reception buffer 132, and supplies this to the decoding unit 133 along with the encoded data corresponding to the synchronous playback point-in-time thereof.

Flow of Processing

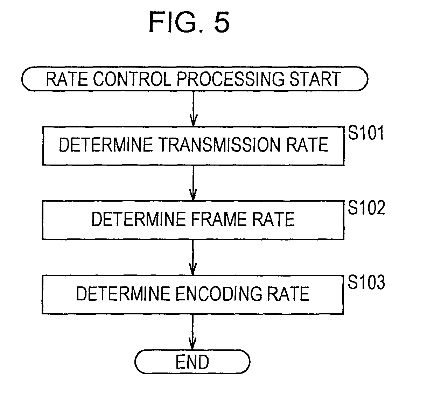

With regard to principal processing relating to data transmission to be executed at the information processing system 100 of such a configuration, an example of the flow of the processing will be described. First, an example of the flow of rate control processing to be executed by the transmission rate control unit 122 of the transmission device 101 will be described with reference to the flowchart in Fig. 5.

The transmission rate control unit 122 executes the rate control processing at predetermined timing to determine various types of rates based on the network state information supplied from the RTCP unit 121.

Upon the rate control processing being started, the transmission rate control unit 122 determines the transmission rate in step S101. The method for determining this transmission rate may be arbitrarily selected. For example, the transmission rate may be determined in accordance with the method indicated in "IETF RFC3448 TCP Friendly Rate Control (TFRC): Protocol Specification".

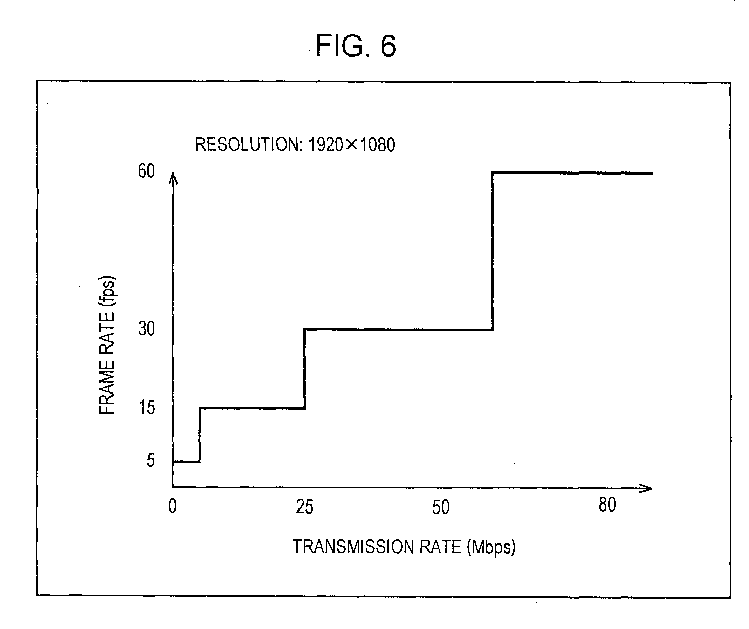

In step S102, the transmission control unit 122 determines the frame rate after the frame conversion at the frame rate conversion unit 113 based on the transmission rate determined in step S101. This frame rate after conversion becomes a frame rate at the time of transmission (transmission frame rate). This frame rate determining method is arbitrary. For example, an arrangement may be made wherein a frame rate obtained by optimizing quality sensed by the user at each transmission rate is set beforehand such as the graph illustrated in Fig. 6, and the frame rate corresponding to a transmission rate is set in accordance with the graph thereof. This frame-rate/transmission-rate setting graph is preferably changed (set) according to properties such as an application, encoding unit, or the like. Note that data indicating relationship in conversion between a transmission rate and a frame rate such as this graph in Fig. 6 may be table information using a representative point, or may be a mathematical expression.

In step S103, the transmission rate control unit 122 determines an encoding rate. As described above, the encoding unit 112 of the transmission device 101 performs encoding processing with the sampling rate (capture rate) of the original moving image as a frame rate. Subsequently, the frame rate conversion unit 113 performs frame rate conversion by thinning-out processing for thinning out a part of the frames. Therefore, in order to equate the data rate after frame rate conversion with the transmission rate, if we say that the encoding rate is R_e (bps), transmission rate is R_t (bps), sampling frame rate is f_s (fps), and frame rate after conversion is f_t (fps), the transmission rate control unit 122 sets an encoding rate R_e so as to satisfy the following Expression (1).

[Mathematical Expression 1]

$$R_e = R_t \times \frac{f_s}{f_t} \qquad \cdots (1) \qquad \qquad \cdots (1)$$

After each rate has been determined as described above, the rate control processing is ended.

The above rate control method is an example, so each rate may be controlled by a method other than the above. For example, an arrangement may be made wherein the encoding unit 112 has a frame rate conversion function, and the transmission rate control unit 122 equally sets the encoding rate and transmission rate, and supplies the encoding rate and the frame rate after conversion to the encoding unit 112.

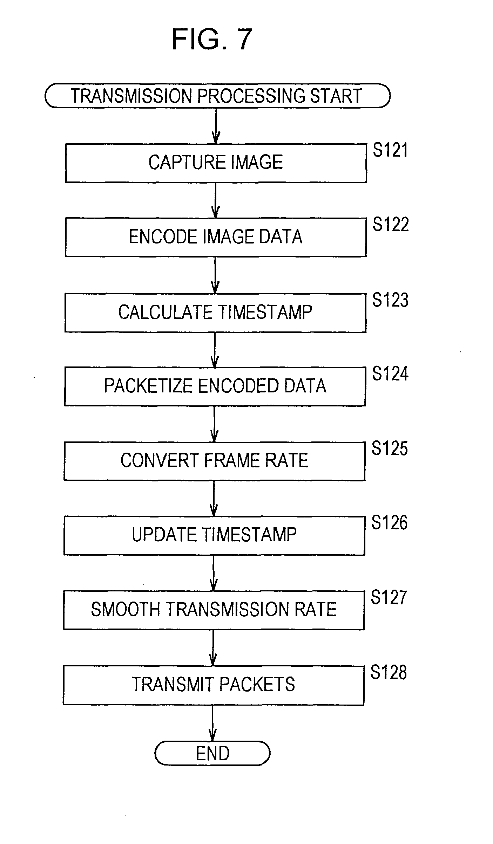

Each unit of the transmission device 101 executes transmission processing, and encodes image data with the rate based on the rate control as described above, and transmits this. An example of the flow of the transmission processing will be described with reference to the flowchart in Fig. 7.

Upon the transmission processing being started, in step S121 the capture unit 111 captures the moving image (video data input from video IN which is video input interface via a video camera or the like) externally supplied.

In step S122, the encoding unit 112 encodes the supplied image data wit the encoding rate specified by the transmission rate control unit 122. In step S123, the encoding unit 112 calculates a timestamp value in sync with the capture point-in-time based on capture point-in-time information.

In step S124, the encoding unit 112 divides the encoded data obtained by encoding into multiple RTP packets, for example. The encoding unit 112 adds the timestamp value calculated by the processing in step S123 to the RTP packets thereof as a RTP timestamp.

In step S125, the frame rate conversion unit 113 converts the frame rate into the frame rate specified by the transmission rate control unit 122, for example, by frame thinning-out processing for thinning out a part of the frames.

Now, description will be made regarding a case for converting from a sampling frame rate f_s (fps) into a transmission frame rate f_t (fps) after conversion. These f_s and f_t satisfy the relation of the following Expression (2) .

[Mathematical Expression 2]

$$f_s = M \times f_t \qquad \cdots (2)$$

($f_s \geq f_t$, M is a positive integer)

In Expression (2), the variable M indicates a frame thinning-out rate. The frame rate conversion unit 113 extracts frames form data before conversion with a frequency of one frame as to M frames, and generates data after conversion using the extracted frames.

If we say that the frame data before conversion is F(n) (n is a frame consecutive number), the frame data after conversion is F'(n) (n is a consecutive number of the frames after conversion), and data D_o before conversion is indicated by the following Expression (3), data D'_t after conversion can be represented such as the following Expression (4).

[Mathematical Expression 3]

$$D\_o = \{F(0),\ F(1),\ …,\ F(k),\ …\} \quad . . . (3)$$

$$D'\_t = \{F'(0),\ F'(1),\ …,\ F'(k),\ …\}$$
$$= \{F(0),\ F(M),\ …,\ F(kM),\ …\} \ . . . (4)$$

(k is a positive integer)

Note that the frame rate conversion unit 113 may convert the frame rate by a method other than the frame thinning-out processing. The frame rate conversion method is arbitrary. For example, the frame rate may be converted by synthesizing consecutive multiple frames using the image synthesizing processing such as addition average processing or the like to reduce the number of the frames.

Also, in the event that the frame rate specified by the transmission rate control unit 122 is the same as the frame rate before conversion (sampling frame rate), the processing in step S125 is omitted.

In step S126, the timestamp control unit 114 controls, for example, the RTP timestamp included in the RTP header portion. The timestamp control unit 114 performs timestamp adjustment using the frame thinning-out rate M of the frame data after conversion subjected to frame rate conversion at the frame rate conversion unit 113.

Let us assume that the frame data before conversion is $F(n)$ (n is the consecutive number of the frames before conversion), the frame data after conversion is $F'(m)$ (m is the consecutive number of the frame data after conversion), the encoded block data before conversion is $B(n, k)$, and the encoded block data after conversion is $B'(m, k)$ (k is the consecutive number of encoded block within the frame data). Also, the timestamp value of the encoded block data $B(n, k)$ before conversion is assumed to be $TS(n, k)$. Further, the timestamp value before timestamp control of the encoded block data $B'(m, k)$ after conversion is assumed to be $TS'(m, k)$. Also, the timestamp value after timestamp control of the encoded block data $B'(m, k)$ after conversion is assumed to be $TS''(m, k)$. Subsequently, the frame thinning-out rate is assumed to be M.

At this time, the frame data after conversion $F'(m)$, encoded block data $B'(m, k)$ after conversion, and timestamp value $TS'(m, k)$ before timestamp control of the encoded block data $B'(m, k)$ after conversion are represented such as the following Expression (5) through Expression (7).

[Mathematical Expression 4]

$$F'(m) = F(mM) \qquad \cdots (5)$$

$$B'(m, k) = B(mM, k) \qquad \cdots (6)$$

$$TS'(m, k) = TS(mM, k) \qquad \cdots (7)$$

The timestamp value $TS''(m, k)$ after timestamp control of the encoded block data $B'(m, k)$ after conversion is adjusted according to frame count $(M - 1)$ before conversion thinned out between the frame data $F'(m)$ after conversion and the next frame data $F'(m + 1)$ after conversion. The timestamp value $TS''(m, k)$ after timestamp control is represented with the following Expression (8).

[Mathematical Expression 5]

$$TS''(m, k) = TS(mM + (M-1), k) \qquad \cdots(8)$$

Specifically, the same timestamp value as with the encoded block data matching the last frame data before conversion of the frame data before conversion thinned out after the corresponding frames is set to the timestamp value after timestamp control. In the event that frames immediately after the frame data after conversion have not been thinned out, the timestamp value is not changed before and after timestamp control.

Note that, with this timestamp control, in the event that the frame thinning-out processing has been performed immediately after certain frame data, it is assumed that the corresponding frame is also used even during time to be assigned to the thinned out frames, smoothed, and transmitted, due to smoothing of the transmission rate. Accordingly, in order to perform synchronous playback in accordance with the arrival point-in-time of the trailing data of each piece of smoothed frame data, the same timestamp value as with the compressed encoded block data matching the last frame data before conversion of the frame data before conversion thinned out after the corresponding frame is set.

Upon the timestamp being updated as described above, in step S127 the smoothing unit 115 adjusts the transmission timing of the packet, and smoothes the transmission rate. The smoothing unit 115 performs, for example, smoothing of the transmission rate by the same processing as with Token Bucket described in ITU-T Recommendation Y.1221 Traffic control and congestion control in IP-based networks.

In step S128, the RTP transmission unit 116 transmits the packet at timing controlled by the smoothing unit 115. Upon the packet being transmitted, the transmission processing is ended. As described above, each packet is sequentially transmitted. The processing of each step described above is executed as soon as preparations have been completed, and also the processing is repeated as to the next data as soon as the processing at each processing units has been completed. Accordingly, the above each process is executed in parallel as appropriate.

Note that the smoothing processing may be performed at a relay device, for example, such as a router, an Ethernet (registered trademark) Switch, or the like, in the outside of the transmission device 101.

The reception device 102 executes reception processing to receive the packet thus transmitted.

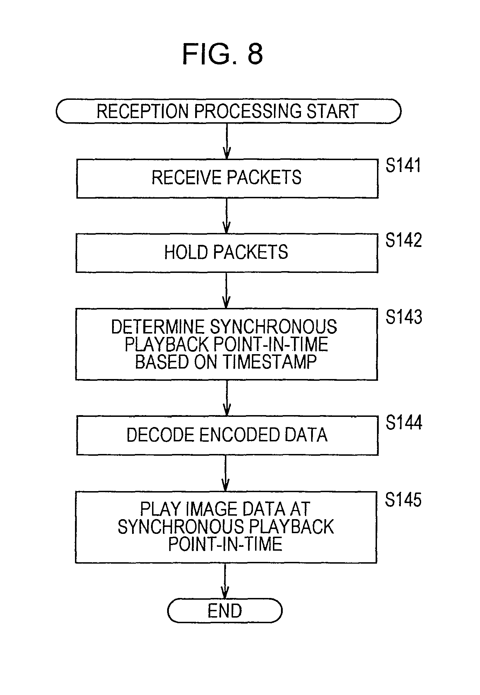

An example of the flow of the reception processing will be described with reference to the flowchart in Fig. 8.

Upon the reception processing being started, the RTP reception unit 131 of the reception device 102 receives the RTP packet transmitted from the transmission device 101 in step S141. In step S142, the reception buffer 132 holds the received RTP packet.

In step S143, the synchronization control unit 142 determines synchronous playback point-in-time, for example, based on the timestamp information of each RTP packet stored in the reception buffer 132.

Let us assume that the timestamp value of the first RTP packet is TS_init, the reception point-in-time of the RTP packet thereof is T_init (sec), an RTP timestamp frequency is f_rtp (Hz), playback offset time is T_play (sec), a transmission/reception device point-in-time offset is T_skew (sec), and the reception point-in-time of the RTP packet of the timestamp value TS is T_r (TS). At this time, the playback point-in-time T_p (TS) of the RTP packet of the timestamp value TS can be calculated, for example, such as the following Expression (9).

[Mathematical Expression 6]

$$T_p(TS) = \frac{TS - TS_{init}}{f_{rtp}} + T_{init} + T_{play} + T_{skew} \qquad \cdots(9)$$

It goes without saying that the playback point-in-time T_p (TS) of an RTP packet may be calculated using a method other than this.

Note that the playback offset time T_play indicates offset time from packet reception point-in-time to playback point-in-time. This parameter is for reflecting processing delay within the reception device 102. The transmission/reception device point-in-time offset time T_skew is offset time for absorbing difference of the system clock frequencies between the transmission and reception devices. For example, the value of this transmission/reception device point-in-time offset time T_skew is "0" immediately after stream reception start, and is corrected with a certain time interval such as the following Expression (10).

[Mathematical Expression 7]

$$T_{skew} = T_{skew} - \alpha \times (T_p(TS) - T_r(TS) - T_{play}) \qquad \cdots (10)$$
$$(0 < \alpha \leq 1)$$

The synchronization control unit 142 supplies the synchronous playback point-in-time thus determined, and compressed moving image data store in the RTP packet from the reception buffer 132 to the decoding unit 133.

The decoding unit 133 decodes the encoded data in step S144. In step S145, the decoding unit 133 plays the image data obtained by decoding at the synchronous playback point-in-time determined by the synchronization control unit 142, and outputs this from the video output interface (video OUT). The output data is output to, for example, a video display device such as a display or the like.

After the image data is played, the reception processing is ended. As described above, each received packet is sequentially processed, and is output as image data. The processing of each step described above is executed as soon as preparations have been completed, and also the processing is repeated as to the next data as soon as the processing at each processing units has been completed. Accordingly, the above each process is executed in parallel as appropriate.

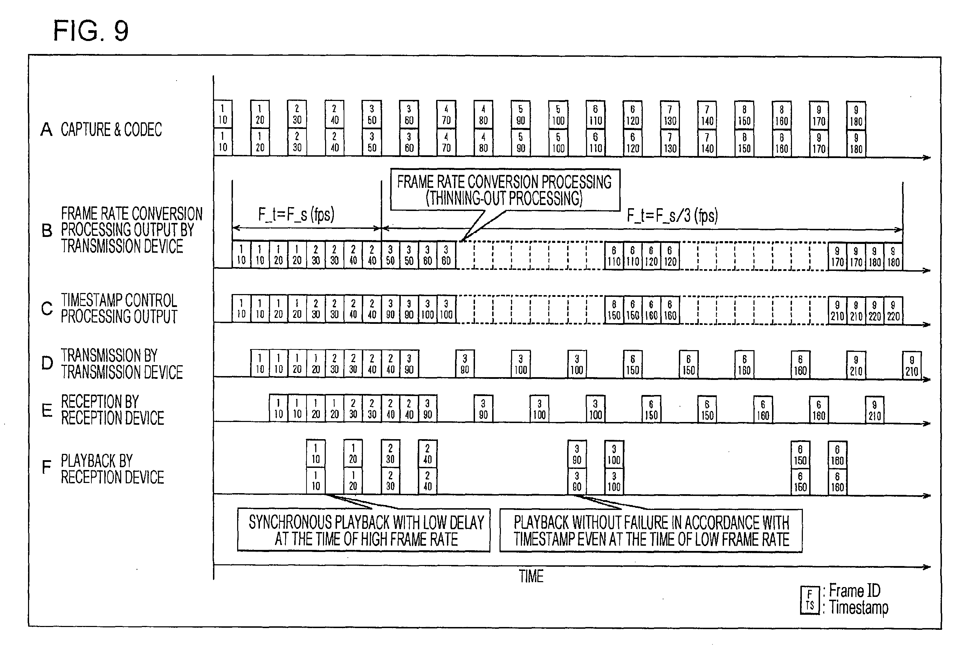

Fig. 9 is a diagram for describing an example of timing when each process in data transmission is executed in the event of applying the present invention.

This Fig. 9 is a diagram corresponding to Fig. 1 through Fig. 3, and illustrates basically the same content as with these drawings. Fig. 9 illustrates, as the output of each of a series of processing, "capture & CODEC" (A in Fig. 9) indicating the output timing of capturing and encoding of an image, "frame rate conversion processing output by transmission device" (B in Fig. 9) indicating the output timing of frame rate conversion, "timestamp control processing output" (C in Fig. 9) indicating the output timing of timestamp updating, "transmission by transmission device" (D in Fig. 9) indicating the transmission timing of packets, "reception by reception device" (E in Fig. 9) indicating the reception timing of packets, and "playback by reception device" (F in Fig. 9) indicating the playback output timing of image data.

In the case of the example in Fig. 9, with the transmission device 101, capturing and encoding are performed each certain interval for each compressed and encoded block by the "capture & CODEC" (A in Fig. 9) processing, and the frames are thinned out up to the frame rate of one third of the sampling frame rate by the "frame rate conversion by transmission device" processing (B in Fig. 9). Also, conversion of the timestamp value is performed according to the frame thinning-out rate by the "timestamp control" processing (C in Fig. 9), and the packets of the data smoothed by the smoothing processing are transmitted at timing indicated with the "transmission by transmission device" (D in Fig. 9).

With the reception device 102, the packets are received at the timing of the "reception by reception device" (E in Fig. 9), and are played at the timing of "playback by reception device" (F in Fig. 9) in accordance with the processing of the "synchronization control unit". At this time, let us say that "playback by reception device" is not performed unless the "reception by reception device" of all of the data of an encoded block has been completed.

Here, as illustrated in B in Fig. 9, let us assume that with the frames of the frame number "3" and thereafter, two frames of three frames are thinned out (M = 3). In this case, the frame rate (frame count) of the frames of the frame number "3" and thereafter becomes one third before the frame number "3". Accordingly, as illustrated in D in Fig. 9, each frame is transmitted in a manner scattered by the smoothing processing for the worth of reduced frames.

With a conventional method, such as the time chart examples in Fig. 2 and Fig. 3, there is a concern that failure of playback video, or increase in unnecessary delay may be caused, but as described above, an arrangement has been made wherein the timestamp is updated according to the frame rate after change at the timestamp control unit 114 of the transmission device 101, whereby the reception device 102 for performing playback at timing based on the updated timestamp thereof can play image data in a sure manner without synchronous failure regardless of the height of the frame rate as illustrated in F in Fig. 9.

In this way, even when the transmission device 101 transmits a moving image at real time while dynamically changing the frame rate, the reception device 102 can realize low-delay transmission without causing failure in synchronous playback.

Also, with the information processing system 100, the frame rate can dynamically be changed while performing low-delay transmission synchronous playback. Accordingly, the frame rate can dynamically be changed for transmission rate control, so as compared to a case of performing transmission rate control using image quality parameters alone, image quality per one image can be set to high, which is effective in the event of transmitting a moving image with little motion.

Further, with the information processing system 100, even after smoothing of the transmission rate, low-delay transmission synchronous playback can be performed while dynamically changing the frame rate, so there is no need to perform burst transmission of data, and occurrence of packet loss in a network can be prevented.

That is to say, each device of the information processing system 100 can realize low-delay transmission synchronous playback of an image in a surer manner.

Note that, description has been made so far wherein the transmission device 101 adds a timestamp in sync with sampling point-in-time to moving image data, and the reception device 102 play each frame of the moving image data in sync with the timestamp thereof, but such information for controlling playback point-in-time may be information other than the timestamp as long as the information is information in sync with the sampling point-in-time. For example, instead of the timestamp, an ID value to be assigned to moving image data for each of predetermined data units may be employed such as a frame ID or a block ID within a frame, or the like. If the sampling rate is apparent, the reception device 102 can obtain the same information as the timestamp form these frame ID or block ID within a frame. The transmission device 101 updates such an ID value to be assigned to moving image data for each of predetermined data units, in sync with the sampling point-in-time of each frame of the moving image data, according to frame rate conversion, whereby the playback timing at the reception device 102 can be controlled in the same way as with the above timestamp case. That is to say, each device of the information processing system 100 can realize low-delay transmission synchronous playback of the image in a surer manner.

2. Second Embodiment

Encoding Processing

Next, description will be made regarding encoding processing and decoding processing to be applied at the above information processing system 100.

The encoding method of the encoding unit 112 (the decoding method of the decoding unit 133) is basically arbitrary. Any kind of method can be applied, but for example, a moving image encoding method presented in PTL 1 may be employed wherein encoding is performed with several lines of each picture of a moving image as a single encoded block.

First, the configuration of the encoding unit 112 will be described.

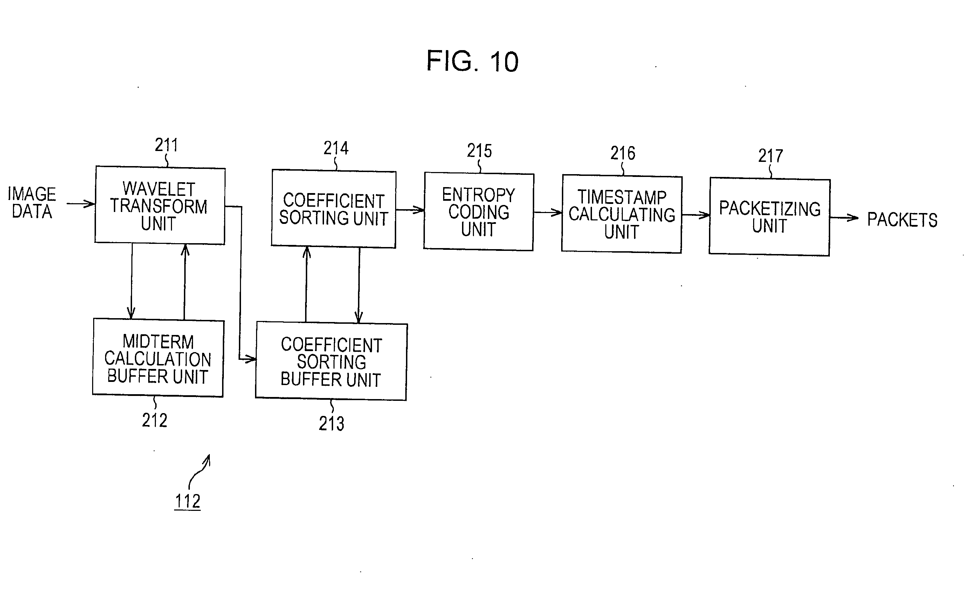

Fig. 10 is a block diagram illustrating a detailed configuration example of the encoding unit 112 to which the present invention has been applied. As illustrated in Fig. 10, the encoding unit 112 includes a wavelet transform unit 211, a midterm calculation buffer unit 212, a coefficient sorting buffer unit 213, a coefficient sorting unit 214, an entropy coding unit 215, a timestamp calculating unit 216, and a packetizing unit 217.

The image data input to the encoding unit 112 is temporarily pooled in the midterm calculation buffer unit 212 via the wavelet transform unit 211. The wavelet transform unit 211 subjects the image data pooled in the midterm calculation buffer unit 212 to wavelet transform. Specifically, the wavelet transform unit 211 reads out the image data from the midterm calculation buffer unit 212, subjects this to filter processing by an analyzing filter to generate the coefficient data of low-frequency components and high-frequency components, and stores the generated coefficient data in the midterm calculation buffer unit 212.

The wavelet transform unit 211 includes a horizontal analyzing filter and a vertical analyzing filter, and subjects image data group to analyzing filter processing regarding both of a screen horizontal direction and a screen vertical direction. The wavelet transform unit 211 reads out the coefficient data of low-frequency components stored in the midterm calculation buffer unit 212, subjects the read coefficient data filter processing by the analyzing filters, and further generates the coefficient data of high-frequency components and low-frequency components. The generated coefficient data is stored in the midterm calculation buffer unit 212.

Upon this processing being repeated and the division level reaching a predetermined level, the wavelet transform unit 211 reads out coefficient data from the midterm calculation buffer unit 212, and writes the read coefficient data in the coefficient sorting buffer unit 213.

The coefficient sorting unit 214 reads out the coefficient data written in the coefficient sorting buffer unit 213 in predetermined sequence, and supplies to the entropy coding unit 215. The entropy coding unit 215 quantizes the supplied coefficient data using a predetermined method, and encodes this using a predetermined entropy encoding method, for example, such as Huffman coding or arithmetic coding. The entropy coding unit 215 supplies the generated encoded data to the timestamp calculating unit 216.

The timestamp calculating unit 216 calculates the timestamp value of the supplied encoded data based on the capture point-in-time information of the data thereof. That is to say, the timestamp calculating unit 216 calculates a timestamp value in sync with capture point-in-time. The timestamp calculating unit 216 supplies the calculated timestamp value to the packetizing unit 217 along with the encoded data.

The packetizing unit 217 packetizes the supplied encoded data so as to obtain RTP packets, and further adds the timestamp value to each packet as an RTP timestamp value. The packetizing unit 217 supplies the generated packets to the frame rate conversion unit 113.

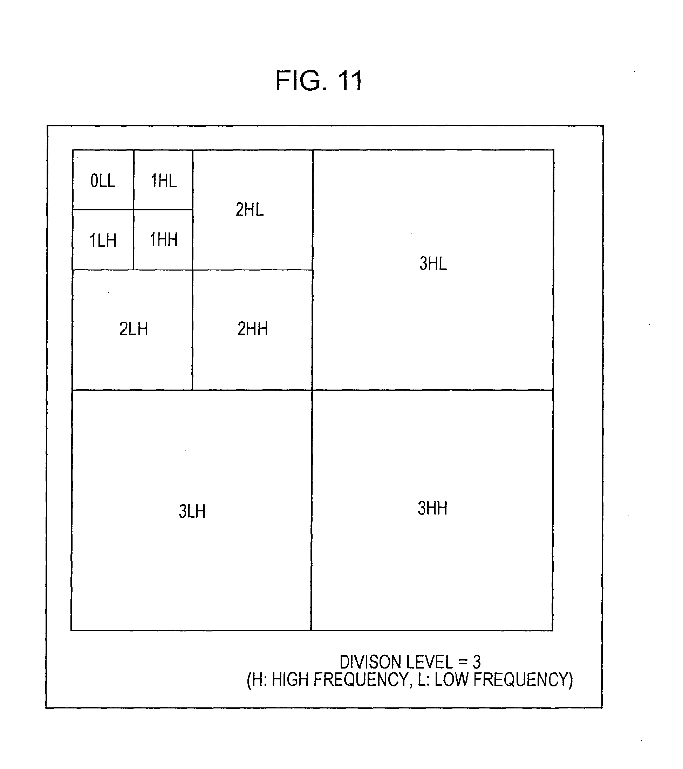

Next, description will be made in more detail regarding processing to be performed by the wavelet transform unit 211 in Fig. 10. First, wavelet transform will schematically be described. With wavelet transform as to image data, as schematically illustrated in Fig. 11, processing for dividing the image data into a high spatial frequency band and a low spatial frequency band is recursively repeated as to the data of a low spatial frequency band obtained as a division result. In this way, the data of a low spatial frequency band is driven into a smaller region, thereby enabling effective compression encoding.

Note that Fig. 11 is an example in the event that processing for dividing the lowest component region of the image data into a low-frequency component region L and a high-frequency component region H is repeated three times to obtain a division level = 3 that indicates the total number of divided hierarchies. In Fig. 11, "L" and "H" represent a low-frequency component and a high-frequency component, respectively. With regard to the sequence of "L" and "H", the front side indicates the band of a division result in the horizontal direction, and the rear side indicates the band of a division result in the vertical direction. Also, a numeric before "L" and "H" indicates the hierarchy of the region thereof, and is represented with a smaller value equivalent to the low frequency in the case of the hierarchy of a low-frequency component. The maximum value of this hierarchy indicates the division level (divided count) at that time of wavelet transform.

Also, as can be understood from the example in Fig. 11, the processing is performed from the lower right region to the upper left region of the screen in a stepwise manner, and low-frequency components are driven into a smaller region. Specifically, with the example in Fig. 11, the lower right region of the screen is set to a region 3HH having the least low-frequency components (including the largest number of high-frequency components), the upper left region obtained by dividing the screen into four is further divided into four, and the upper left region of these divided four regions is further divided into four. The region on the upper left corner is set to a region OLL including the largest number of low-frequency components.

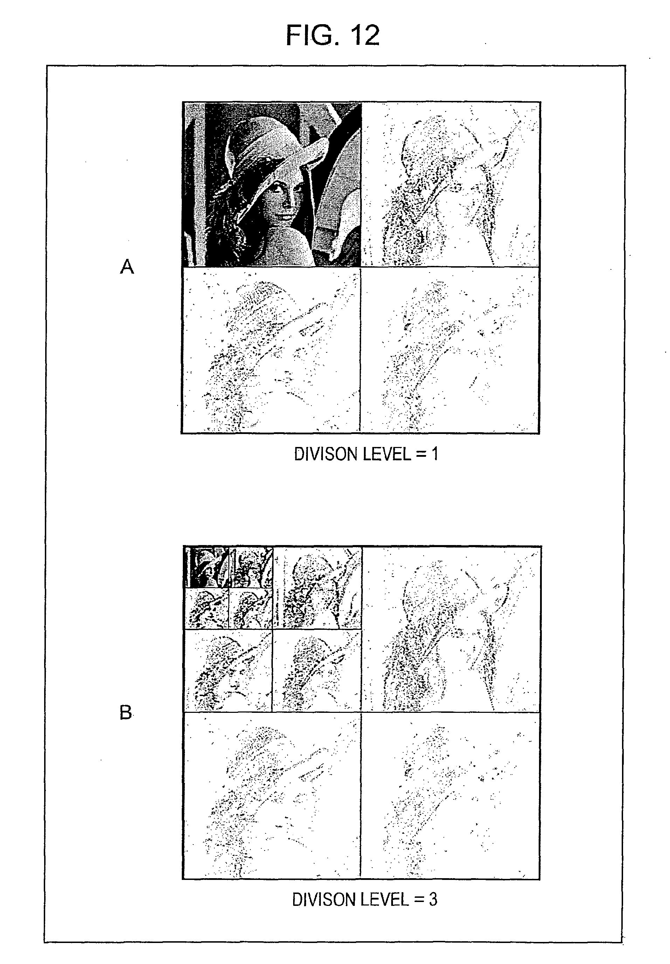

The reason why low-frequency components are repeatedly transformed and divided is because the energy of an image is concentrated on low-frequency components. This can also be understood from that as the division level is advanced from a state of the division level = 1 with an example being illustrated in A in Fig. 12 such as a state of the division level = 3 with an example being illustrated in B in Fig. 12, sub bands are formed as illustrated in B in Fig. 12. For example, the division level of wavelet transform in Fig. 11 is 3, and as a result thereof, 10 sub bands are formed.

The wavelet transform unit 211 usually performs the processing as described above using a filter bank made up of a low-frequency filter and a high-frequency filter. Note that digital filters usually have an impulse response of multiple-tap length, i.e., a filter coefficient, so as much input image data or coefficient data as possible that can be subjected to filter processing needs to be buffered beforehand. Also, in the event that wavelet transform is performed over multiple stages as well, similarly the wavelet transform coefficient generated on the previous stage needs to be buffered as much as filter processing can be performed.

As a specific example of this wavelet transform, a method employing a $5 \times 3$ filter will be described. This method employing a $5 \times 3$ filter is also employed with the JPEG (Joint Photographic Experts Group) 2000 standard, and is an excellent method in that wavelet transform can be performed with a few number of filter taps.

Impulse response (Z transform expression) of a $5 \times 3$ filter is, as illustrated in the following Expression (11) and Expression (12), a low-frequency filter $H_0$ (z) and a high-frequency filter $H_1$ (z).

$$H_0 (z) = (-1 + 2z^{-1} + 6z^{-2} + 2z^{-3} - z^{-4}) / 8 \quad . . . (11)$$

$$H_1 (z) = (-1 + 2z^{-1} - z^{-2}) / 2 \quad . . . (12)$$

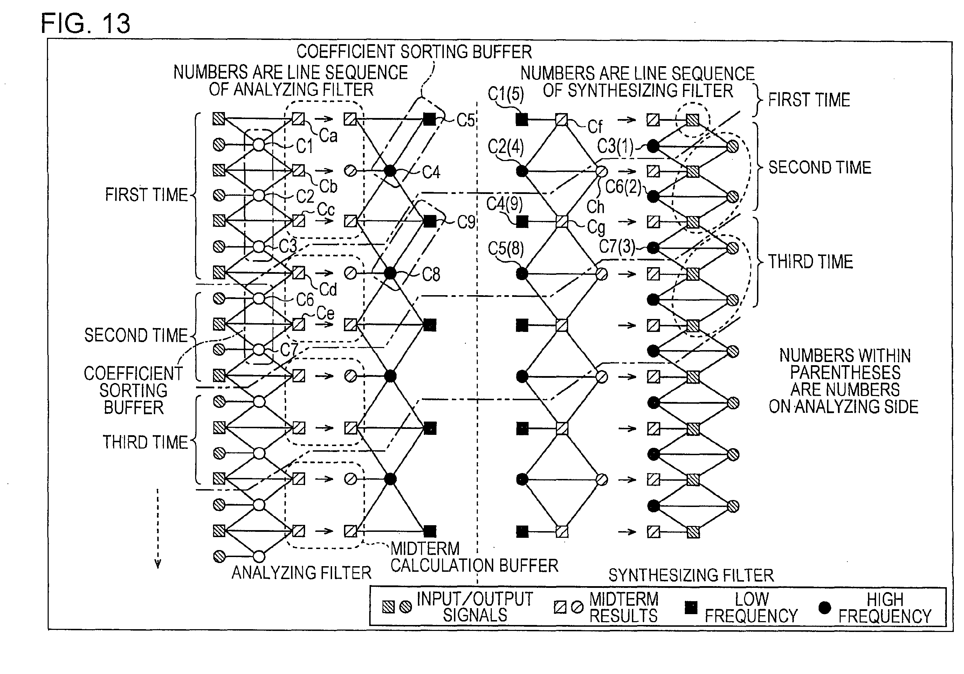

According to these Expression (11) and Expression (12), the coefficients of a low-frequency component and a high-frequency component can directly be calculated. Here, for example, as illustrated in Fig. 13, calculation of the filter processing can be reduced by employing the lifting (Lifting) technology.

Next, this wavelet transform method will further be described in a specific manner. Fig. 13 illustrates an example wherein the filter processing according to lifting of a $5 \times 3$ filter has been executed until the division level = 2. Note that, in Fig. 13, a portion indicated as an analyzing filter on the left side in the drawing is a filter of the wavelet transform unit 211 in Fig. 10. Also, a portion indicated as a synthesizing filter on the right side in the drawing is a filter of a later-described wavelet transform unit.

Note that, with the following description, let us assume that one line is configured by scanning pixels from the left edge to the right edge of the screen, for example, with the pixel on the upper left corner of the screen in a display device or the like as the first pixel, and one screen is configured by scanning for each line being performed from the upper edge to the lower edge of the screen.

In Fig. 13, the left edge column is illustrated by pixel data existing in the corresponding position on the line of the original image data being arrayed in the vertical direction. Specifically, the filter processing in the wavelet transform unit 211 is performed by pixels being vertically scanned on the screen using the vertical filter. The first column through the third column from the left edge illustrate the filter processing of the division level = 1, and the fourth column through the sixth column illustrate the filter processing of the division level = 2. The second column from the left edge illustrates high-frequency component output based on the pixels of the original image data on the left edge, and the third column from the left edge illustrates low-frequency component output based on the original image data and high-frequency component output.

The filter processing of the division level = 2 is performed as to the output of the filter processing of the division level = 1 as illustrated on the fourth column through the sixth column from the left edge.

With the filter processing of the division level = 1, high-frequency component coefficient data is calculated based on the pixels of the original image data as a first stage of the filter processing, and low-frequency component coefficient data is calculated based on the high-frequency component coefficient data calculated on the first stage of the filter processing, and the pixels of the original image data as a second stage of the filter processing. The filter processing of an example of the division level = 1 is illustrated on the first column through the third column on the left side (synthesizing filter side) in Fig. 13. The calculated high-frequency component coefficient data is stored in the coefficient sorting buffer unit 213 in Fig. 10. Also, the calculated low-frequency component coefficient data is stored in the midterm calculation buffer unit 212 in Fig. 10.

In Fig. 13, the coefficient sorting buffer unit 213 is illustrated as a portion surrounded with a dashed dotted line, and the midterm calculation buffer unit 212 is illustrated as a portion surrounded with a dotted line.

The filter processing of the division level = 2 is performed based on the results of the filter processing of the division level = 1 held in the midterm calculation buffer unit 212. With the filter processing of the division level = 2, the same filter processing as with the division level = 1 is performed by regarding the coefficient data calculated as the low-frequency component coefficient in the filter processing of the division level = 1 as the coefficient data including low-frequency components and high-frequency components. The high-frequency component coefficient data and low-frequency component coefficient data calculated in the filter processing of the division level = 2 are stored in the coefficient sorting buffer unit 213.

The wavelet conversion unit 211 performs the filter processing as described above regarding each of the horizontal and vertical directions of the screen. For example, first, the filter processing of the division level = 1 is performed in the horizontal direction, and the generated high-frequency component coefficient data and low-frequency component coefficient data are stored in the midterm calculation buffer unit 212. Next, the coefficient data stored in the midterm calculation buffer unit 212 is subjected to the filter processing of the division level = 1 in the vertical direction. According to the processing in the horizontal and vertical directions of the division level = 1, four regions of a region HH and a region HL according to each of high-frequency component coefficient data and low-frequency component coefficient data obtained by further dividing the high-frequency components, and a region LH and a region LL according to each of high-frequency component coefficient data and low-frequency component coefficient data obtained by further dividing the low-frequency components, are formed.

Subsequently, with the division level = 2, the low-frequency component coefficient data generated with the division level = 1 is subjected to the filter processing regarding each of the horizontal direction and the vertical direction. That is to say, with the division level = 2, the region LL divided with the division level = 1, and formed is further divided into four, and a region HH, a region HL, a region LH, and a region LL are formed within the region LL.

The wavelet transform unit 211 divides the filter processing according to wavelet transform into processing for every several lines regarding the vertical direction of the screen, thereby dividing this filter processing into multiple times so as to be performed in a stepwise manner. With the example in Fig. 13, with first processing serving as processing from the first line on the screen, the filter processing is performed regarding seven lines, and with a second processing and thereafter serving as processing from the eight line, the filter processing is performed for every four lines. The number of these lines is based on the number of lines necessary for one line worth of the lowest frequency components being generated after dividing into two of high-frequency components and low-frequency components.

Note that, hereafter, a group of lines including other sub bands, necessary for generating one line worth of the lowest frequency components (one line worth of coefficient data of a sub band of the lowest frequency components) will be referred to as a precinct (or line block). Here, a line indicates one row worth of pixel data or coefficient data to be formed within a picture or field corresponding to pixel data before wavelet transform, or within each sub band. That is to say, a precinct (line block) indicates, with the original image data before wavelet transform, a pixel data group of the number of lines necessary for generating one line worth of coefficient data of a sub band of the lowest frequency components after wavelet conversion, or the coefficient data group of each sub band to be obtained by subjecting the pixel group thereof to wavelet transform.

According to Fig. 13, a coefficient C5 to be obtained as the filter processing result of the division level = 2 is calculated based on a coefficient C4, a coefficient Ca stored in the midterm calculation buffer unit 212, and the coefficient C4 is calculated based on the coefficient Ca, coefficient Cb, and coefficient Cc stored in the midterm calculation buffer unit 212. Further, the coefficient Cc is calculated based on a coefficient C2 and a coefficient C3, stored in the coefficient sorting buffer unit 213, and the pixel data of the fifth line. Also, the coefficient C3 is calculated based on the pixel data of the fifth line through the seventh line. In this way, in order to obtain the coefficient C5 of the low-frequency components with the division level = 2, the pixel data of the first line through the seventh line is required.

On the other hand, with the filet processing of the second and thereafter, the coefficient data already calculated in the last filter processing till the last time, and stored in the coefficient sorting buffer unit 213 can be employed, so the number of necessary lines can be reduced.

Specifically, according to Fig. 13, of the low-frequency components to be obtained as the filter processing results of the division level = 2, a coefficient C9 that is the next coefficient of the coefficient C5 is calculated based on the coefficient C4 and a coefficient C8, and the coefficient Cc stored in the midterm calculation buffer unit 212. The coefficient C4 has already been calculated by the above first filter processing, and stored in the coefficient sorting buffer unit 213. Similarly, the coefficient Cc has already been calculated by the above first filter processing, and stored in the midterm calculation buffer unit 212. Accordingly, with the second filter processing, the filter processing alone for calculating the coefficient C8 is newly performed. This new filter processing is performed further using the eighth line through the eleventh line.

In this way, the data calculated in the processing until the last filter processing and stored in the midterm calculation buffer unit 212 and the coefficient sorting buffer unit 213 can be employed, so each of the second filter processing and thereafter can be performed with the processing for every four lines.

Note that, in the event that the number of lines on the screen does not match the number of encoded lines, the filter processing is performed by duplicating the lines of the original image data by a predetermined method so as to match the number of encoded lines.

In this way, the filter processing only for obtaining the lowest frequency component one line worth of coefficient data is performed in a stepwise manner by being divided into multiple rounds as to the lines of the entire screen (in increments of precincts), whereby a decoded image with low delay can be obtained at the time of transmitting encoded data.

In order to perform wavelet transform, a first buffer to be used for executing wavelet transform itself, and a second buffer for storing a coefficient to be generated while the processing is executed so as to obtain a predetermined division level are required. The first buffer corresponds to the midterm calculation buffer unit 212, and is indicated by being surrounded with a dotted line in Fig. 13. Also, the second buffer corresponds to the coefficient sorting buffer unit 213, and is indicated by being surrounded with a dashed dotted line in Fig. 13. The coefficient stored in the second buffer is used for decoding, and is set to an object for the entropy encoding processing of the subsequent stage.

Next, the processing of the coefficient sorting unit 214 in Fig. 10 will be described. As described above, the coefficient data calculated at the wavelet transform unit 211 is stored in the coefficient sorting buffer unit 213, of which the sequence is sorted by the coefficient sorting unit 214, and the coefficient data is read out, and transmitted to the entropy coding unit 215 in increments of coding units.

As already described, with wavelet transform, coefficients are generated from high-frequency components to low-frequency components. With the example in Fig. 13, with the fist round, the coefficient C1, coefficient C2, and coefficient C3 of high-frequency components are sequentially generated in the filter processing of the division level = 1 using the pixel data of the original image. Subsequently, the low-frequency component coefficient data obtained in the filter processing of the division level = 1 is subjected to the filter processing of the division level = 2, and the coefficient C4 and coefficient C5 of low-frequency components are sequentially generated. That is to say, with the first round, the coefficient data is generated in the order of the coefficient C1, coefficient C2, coefficient C3, coefficient C4, and coefficient C5. This generating order of the coefficient data necessarily becomes this order (order from high-frequency to low-frequency) in the principle of wavelet transform.

On the other hand, with the decoding side, in order to immediately perform decoding with low delay, generation and output of an image needs to be performed from low frequency components. Therefore, it is desired to sort the coefficient data generated on the encoding side from the lowest frequency component side to the high-frequency component side, and to supply this to the decoding side.

Description will be made in a more specific manner with reference to the example in Fig. 13. The right side in Fig. 13 illustrates the synthesizing filter side for performing inverse wavelet transform. The first synthesizing processing (inverse wavelet transform processing) including the first line of output image data on the decoding side is performed using the coefficient C4 and coefficient C5 and coefficient C1 of the lowest frequency components generated in the first filter processing on the encoding side.

Specifically, with the first synthesizing processing, the coefficient data is supplied from the encoding side to the decoding side in the order of the coefficient C5, coefficient C4, and coefficient C1, and with the decoding side, the coefficient C5 and coefficient C4 are subjected to synthesizing processing to generate a coefficient Cf by the processing of the synthesizing level = 2 that is the synthesizing processing corresponding to the division level = 2, and are stored in the buffer. Subsequently, the coefficient Cf and coefficient C1 are subjected to synthesizing processing by the processing of the synthesizing level = 1 that is synthesizing processing corresponding to the division level = 1 to output the first line.

In this way, with the first synthesizing processing, the coefficient data generated in the order of the coefficient C1, coefficient C2, coefficient C3, coefficient C4, and coefficient C5 and stored in the coefficient sorting buffer unit 13 is sorted in the order of the coefficient C5, coefficient C4, coefficient C1, ... to be supplied to the decoding side.

Note that, with the synthesizing filter side illustrated on the right side in Fig. 13, with regard to a coefficient to be supplied from the encoding side, a coefficient number on the encoding side is described within parentheses, and the line sequence of the synthesizing filter is described outside the parentheses. For example, the coefficient C1(5) indicates the coefficient C5 on the synthesizing filter side on the left side in Fig. 13, and the first line on the synthesizing filter side.

The synthesizing processing on the decoding side according to the coefficient data generated in the second filter processing and thereafter on the encoding side can be performed using the coefficient data supplied from the synthesizing or encoding side at the time of the last synthesizing processing. With the example in Fig. 13, the second synthesizing processing on the decoding side to be performed using the coefficient C8 and coefficient C9 of the low-frequency components generated in the second filter processing on the encoding side further requires the coefficient C2 and coefficient C3 generated in the first filter processing on the encoding side, and the second line through the fifth line are decoded.

That is to say, with the second synthesizing processing, the coefficient data is supplied from the encoding side to the decoding side in the order of the coefficient C9, coefficient C8, coefficient C2, and coefficient C3. With the decoding side, in the processing of the synthesizing level = 2, a coefficient Cg is generated using the coefficient C8 and coefficient C9, and the coefficient C4 supplied from the encoding side at the time of the first synthesizing processing, and is stored in the buffer. A coefficient Ch is generated using this coefficient Cg, the above coefficient C4, and the coefficient Cf generated by the first synthesizing processing and stored in the buffer, and is stored in the buffer.

Subsequently, with the processing of the synthesizing level = 1, the synthesizing processing is performed using the coefficient Cg and coefficient Ch generated in the processing of the synthesizing level = 2 and stored in the buffer, the coefficient C2 (coefficient C6(2) is indicated with the synthesizing filter) and the coefficient C3 (coefficient C7(3) is indicated with the synthesizing filter) supplied from the encoding side, and the second line through the fifth line are decoded.

In this way, with the second synthesizing processing, the coefficient data generated in the order of the coefficient C2, coefficient C3, (coefficient C4, coefficient C5), coefficient C6, coefficient C7, coefficient C8, and coefficient C9 on the encoding side is sorted in the order of the coefficient C9, coefficient C8, coefficient C2, coefficient C3, ..., and is supplied to the decoding side.

With the third synthesizing processing and thereafter as well, similarly, the coefficient data stored in the coefficient sorting buffer unit 213 is sorted in a predetermined sequence, and is supplied to the decoding unit, the lines are decoded four lines at a time.

Note that with the synthesizing processing on the decoding side corresponding to the filter processing (hereafter, referred to as "final round") including the line of the lower edge of the screen on the encoding side, all of the coefficient data generated in the processing till then and stored in the buffer is output, so the number of output lines increases. With the example in Fig. 13, eight lines are output to the final round.

Note that the coefficient data sorting processing by the coefficient sorting unit 214 is performed, for example, by sorting the reading addresses at the time of reading out the coefficient data stored in the coefficient sorting buffer unit 213 in a predetermined order.

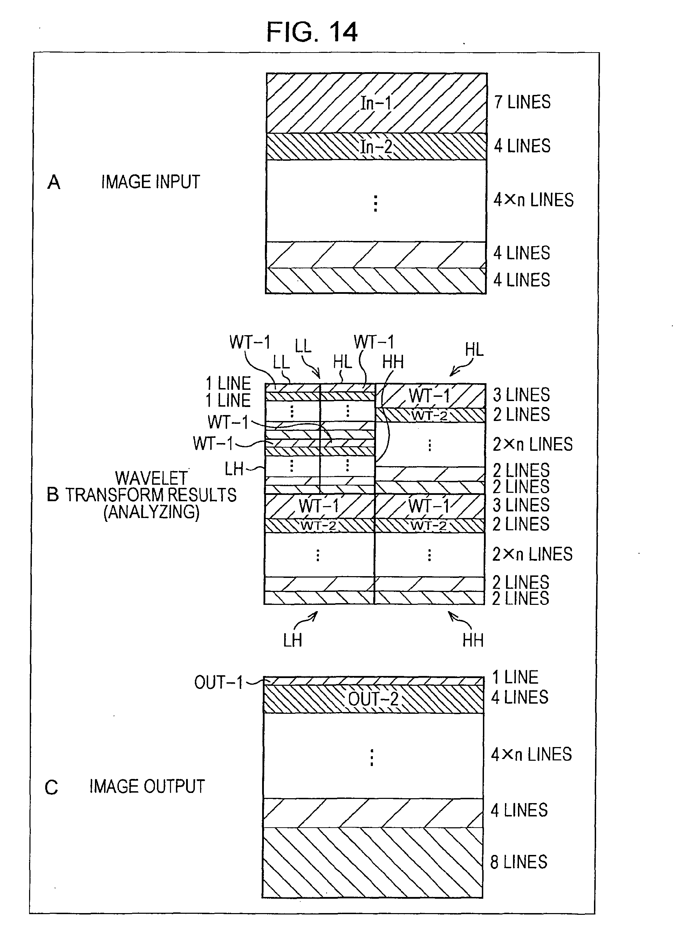

The above processing will be described in a more specific manner with reference to Fig. 14. Fig. 14 is an example for subjecting filter processing according to wavelet transform until the division level = 2 using the $5 \times 3$ filter. With the wavelet transform unit 11, as illustrated in an example in A in Fig. 14, the first filter processing is performed in each of the horizontal and vertical directions as to the first line through the seventh line of the input image data (In-1 in A in Fig. 14).

With the processing of the division level = 1 of the first filter processing, the coefficient data of three lines worth of the coefficient C1, coefficient C2, and coefficient C3 is generated, and is disposed, as illustrated in an example in B in Fig. 14, in each of the regions HH, region HL, and region LH formed with the division level = 1 (WT-1 in B in Fig. 14).

Also, the region LL formed with the division level = 1 is further divided into four by the filter processing in the horizontal and vertical directions according to the division level = 2. The coefficient C5 and coefficient C4 generated with the division level = 2 are, within the region LL according to the division level = 1, one line according to the coefficient C5 is disposed in the region LL, and one line according to the coefficient C4 is disposed in each of the region HH, region HL, and region LH.

With the second filter processing and thereafter by the wavelet transform unit 211, the filter processing is performed for every four lines (In-2 ... in A in Fig. 14), two lines worth of coefficient data is generated with the division level = 1 (WT-2 in B in Fig. 14), and one line worth of coefficient data is generated with the division level = 2.

With the example of the second round in Fig. 13, two lines worth of coefficient data of the coefficient C6 and coefficient C7 are generated in the filter processing of the division level = 1, and as illustrated in an example in B in Fig. 14, is disposed from the next of the coefficient data generated in the first filter processing of the region HH, region HL, and region LH formed with the division level = 1. Similarly, within the region LL according to the division level = 1, one line worth of the coefficient C9 generated in the filter processing of the division level = 2 is disposed in the region LL, and one line worth of the coefficient C8 is disposed in each of the region HL and the region LH.

At the time of decoding the data subjected to wavelet transform as illustrated in B in Fig. 14, as illustrated in an example in C in Fig. 14, in response to the first filter processing according to the first line through the seventh line on the encoding side, the first line according to the first synthesizing processing on the decoding side is output (Out-1 in C in Fig. 14). Hereafter, in response to the filter processing from the second round to the round before the final round on the encoding side, four lines are output at a time on the decoding side (Out-2 ... in C in Fig. 14). Subsequently, in response to the filter processing of the final round on the encoding side, eight lines are output on the decoding side.

The coefficient data generated from the high-frequency component side to the low-frequency component side at the wavelet transform unit 211 is sequentially stored in the coefficient sorting buffer unit 213. After the coefficient data is accumulated in the coefficient sorting buffer unit 213 until sorting of the above coefficient data is enabled, the coefficient sorting unit 214 sorts the coefficient data in an order necessary for the synthesizing processing, and reads out the coefficient data from the coefficient sorting buffer unit 213. The read coefficient data is sequentially supplied to the entropy coding unit 215.

The entropy coding unit 215 sequentially encodes the supplied coefficient data, and supplies the generated encoded data to the timestamp calculating unit 216. The timestamp calculating unit 216 calculates a timestamp as described above, and the packetizing unit 217 performs packetizing as described above.

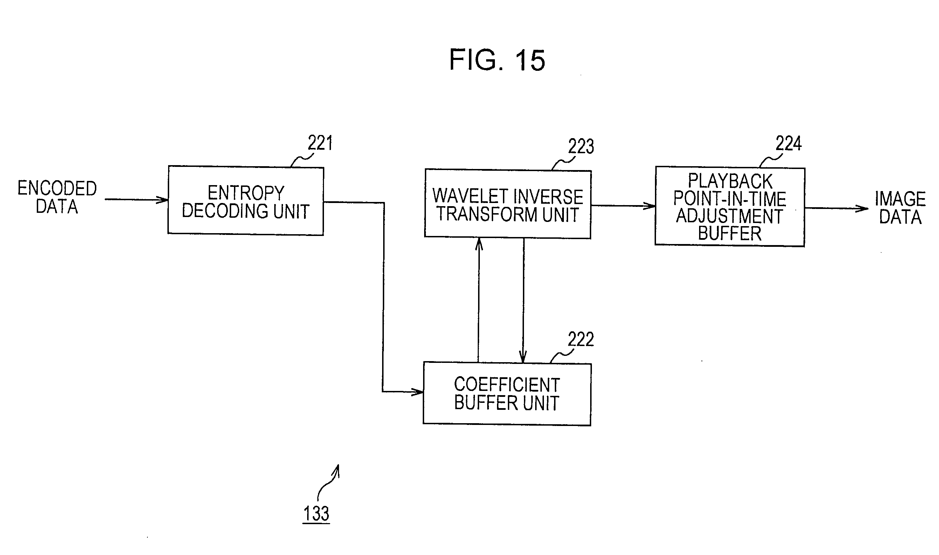

Next, a decoding unit corresponding to the encoding unit 112 in Fig. 10 will be described. Fig. 15 is a block diagram illustrating a configuration example of the decoding unit to which the present invention has been applied. As illustrated in Fig. 15, the decoding unit 133 includes an entropy decoding unit 221, a coefficient buffer unit 222, a wavelet inverse transform unit 223, and a playback point-in-time adjustment buffer 224.

The entropy decoding unit 221 decodes the supplied encoded data by the decoding method corresponding to the encoding method by the entropy coding unit 215 to obtain the coefficient data. The coefficient data thereof is stored in the coefficient buffer unit 222. The wavelet inverse transform unit 223 performs synthesizing filter processing (wavelet inverse transform) by the synthesizing filter using the coefficient data stored in the coefficient buffer 222, and stores the synthesizing filter processing result in the coefficient buffer 222 again. The wavelet inverse transform unit 223 repeats this processing according to the division level, and at the time of obtaining the decoded image data (output image data), causes the playback point-in-time adjustment buffer 224 to temporarily hold this, and to output this at the synchronous playback point-in-time determined by the synchronization control unit 142.

Flow of Processing

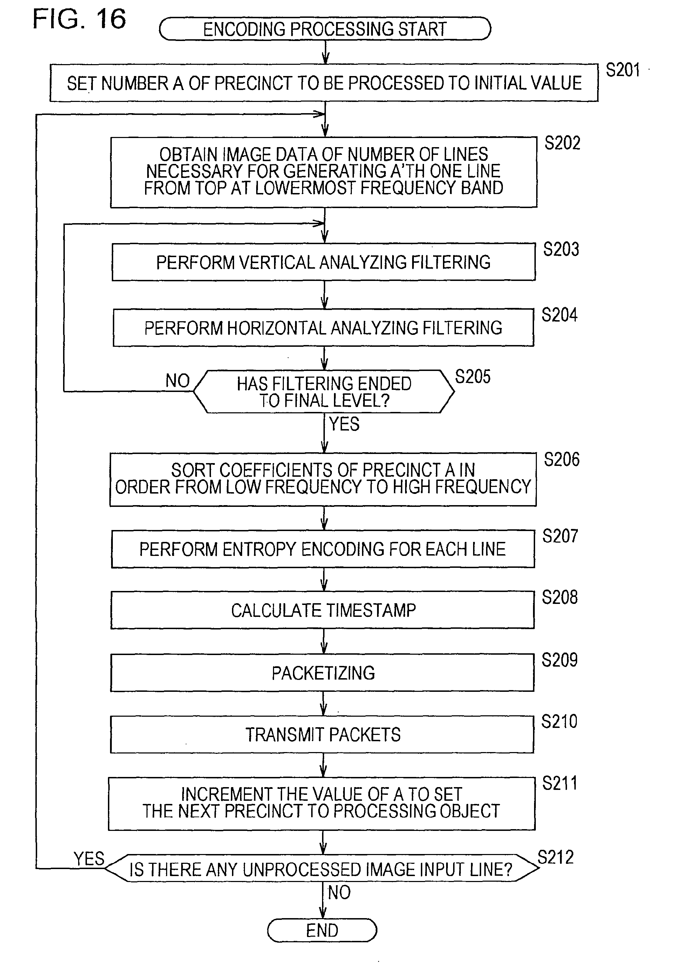

Next, description will be made regarding an example of the flow of processing to be executed by the encoding unit 112 and decoding unit 133. First, an example of the flow of encoding processing to be executed by the encoding unit 112 will be described with reference to the flowchart in Fig. 16. Note that this processing corresponds to step S122 through step S124 in Fig. 7.

Upon the encoding processing being started, in step S201 the wavelet transform unit 211 sets the number A of a precinct to be processed to an initial setting. In the case of usual, the number A is set to "1". Upon the setting being completed, in step S202 the wavelet transform unit 211 obtains the image data of the number of lines (i.e., one precinct) necessary for generating the A'th one line from the top in the lowest frequency sub band.

Also, in step S203, the wavelet transform unit 211 subjects the image data thereof to vertical analyzing filtering processing for subjecting image data arrayed in the vertical direction of the screen to analyzing filtering. In step S204, the wavelet transform unit 211 further subjects the image data thereof to horizontal analyzing filtering processing for subjecting image data arrayed in the horizontal direction of the screen.

In step S205, the wavelet transform unit 211 determines whether or not the analyzing filtering processing has been performed up to the final level. In the event that determination is made that the division level has not reached the final level, the processing returns to step S203, and the analyzing filtering processing in step S203 and step S204 is repeated as to the current division level.

In the event that determination is made in step S205 that the analyzing filtering processing has been performed up to the final level, the processing proceeds to step S206.

In step S206, the coefficient storing unit 214 sorts the coefficients of the precinct A (the A'th precinct from the top of the picture (frame or field)) in the order from low frequency to high frequency. In step S207, the entropy coding unit 215 subjects the coefficients thereof to entropy encoding for each line.

In step S208, the timestamp calculating unit 216 calculates a timestamp in sync with capture point-in-time, of the encoded data obtained through the entropy encoding. In step S209, the packetizing unit 217 packetizes the encoded data. At this time, the packetizing unit 217 adds the calculated timestamp value to the packet.

In step S210, the packetizing unit 217 transmits the generated packet.

In step S211, the wavelet transform unit 211 increments the value of the number A by one to take the next precinct as a processing object, and in step S212, determines whether or not there is an unprocessed image input line regarding a picture (frame or field) to be processed. In the event that determination is made that there is an unprocessed image input line, the processing returns to step S202, where the subsequent processing thereafter is repeated as to the new precinct to be processed.

As described above, the processing in step S202 through step S212 is repeatedly executed, and each precinct is encoded. Subsequently, in the event that determination is made in step S212 that there is no unprocessed image input line, the encoding processing as to the picture thereof is ended. New encoding processing is started as to the next picture.

In this way, the wavelet transform unit 211 consecutively performs the vertical analyzing filtering processing and the horizontal analyzing filtering processing up to the final level in increments of precincts, so as compared to a conventional method, the amount of data necessary to be held (buffered) at a time (same period) is small, the memory amount of a buffer to be prepared can be markedly reduced. Also, the analyzing filtering processing is performed up to the final level, whereby processing, such as coefficient sorting, entropy coding, and so forth of the subsequent stages, can also be performed (i.e., coefficient sorting and entropy coding can be performed in increments of precincts). Accordingly, as compared to a method for subjecting the entire screen to wavelet transform, delay time can be markedly reduced.

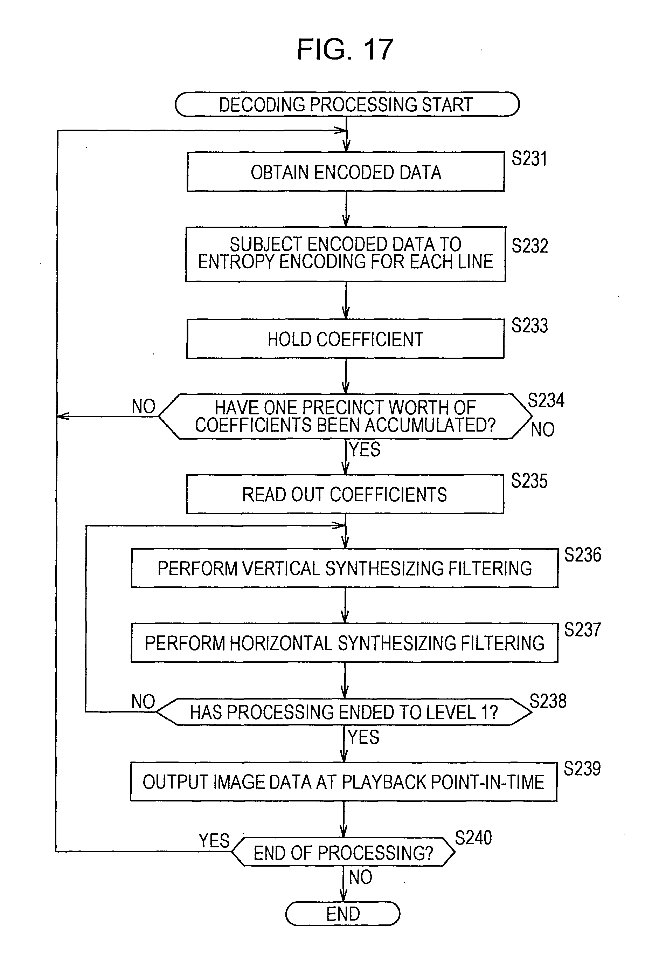

Next, an example of the flow of the decoding processing to be executed by the decoding unit 133 will be described with reference to the flowchart in Fig. 17. Note that this processing corresponds to step S144 through step S145 in Fig. 8.

Upon the decoding processing being started, in step S231 the entropy coding unit 221 obtains the encoded data supplied from the outside of the decoding unit 133, and in step S232 subjects the encoded data to entropy decoding for each line.

In step S233, the coefficient buffer unit 222 holds the decoded and obtained coefficient data thereof. In step S234, the wavelet inverse transform unit 223 determines whether or not one precinct worth of coefficient data has been accumulated in the coefficient buffer unit 222. In the event that determination is made that one precinct worth of coefficient data has not been accumulated, the processing returns to step S231, and the processing thereof and thereafter is executed. That is to say, the wavelet inverse transform unit 223 waits until one precinct worth of coefficient data is accumulated in the coefficient buffer unit 222.

In the event that determination is made in step S234 that one precinct worth of coefficient data has been accumulated in the coefficient buffer unit 222, the processing proceeds to step S235. In step S235, the wavelet inverse transform unit 223 reads out one precinct worth of coefficient data held in the coefficient buffer unit 222. In step S236, the wavelet inverse transform unit 223 performs the vertical synthesizing filtering processing for subjecting coefficient data arrayed in the vertical direction of the screen to synthesizing filtering processing.

In step S237, the wavelet inverse transform unit 223 performs the horizontal synthesizing filtering processing for subjecting coefficient data arrayed in the horizontal direction of the screen to synthesizing filtering processing. In step S238, the wavelet inverse transform unit 223 determines whether or not the synthesizing filtering processing has been completed up to the level 1 (the value of the division level is a level "1"), i.e., whether or not inverse transform has been preformed until the state before wavelet transform. In the event that determination is made that the synthesizing filtering processing has not reached the level 1, the processing returns to step S236, where the filtering processing in step S236 and step S237 is repeated.

In the event that determination is made in step S238 that the synthesizing filtering processing has been completed up to the level 1, the processing proceeds to step S239. In step S239, the wavelet inverse transform unit 223 causes the playback point-in-time adjustment buffer 224 to temporarily hold this, and to externally output this at the synchronous playback point-in-time determined by the synchronization control unit 142.

In step S240, the entropy decoding unit 221 determines whether to end the decoding processing. In the event that determination is made that the decoding processing is not ended, the processing returns to step S231, and the processing thereof and thereafter is repeated. Also, in the event that determination is made in step S240 that the decoding processing is ended due to that the precinct has been ended, the decoding processing is ended.

In the event of a conventional wavelet inverse transform method, first, all of the coefficients of the division level to be processed have been subject to the horizontal synthesizing filtering processing in the horizontal direction of the screen, and then subjected to the vertical synthesizing filtering processing in the vertical direction of the screen. Specifically, each time of each synthesizing filtering process, the results of the synthesizing filtering process thereof needs to be held in a buffer, but at this time, the buffer needs to hold the synthesizing filtering results of the division level at that point, and all the coefficients of the next division level, so a tremendous memory amount needs to be prepared (data amount to be held is great).

Also, in this case, output of image data is not performed until the entire wavelet transform is completed within a picture (frame or field), so delay time from input to output increases.

On the other hand, in the event of the wavelet inverse transform unit 223 of the decoding unit 133, as described above, the vertical synthesizing filtering processing and the horizontal synthesizing filtering processing are consecutively performed up to the level 1 in increments of precincts, so as compared to the conventional method, the amount of data necessary to be buffered at a time (same period) is small, so the memory amount of a buffer to be prepared can be markedly reduced. Also, the synthesizing filtering processing (wavelet inverse transform) is performed up to the level 1, so image data can sequentially be output (in increments of precincts) before the entire image data within a picture is obtained, and accordingly, delay time can be greatly reduced as compared to the conventional method.

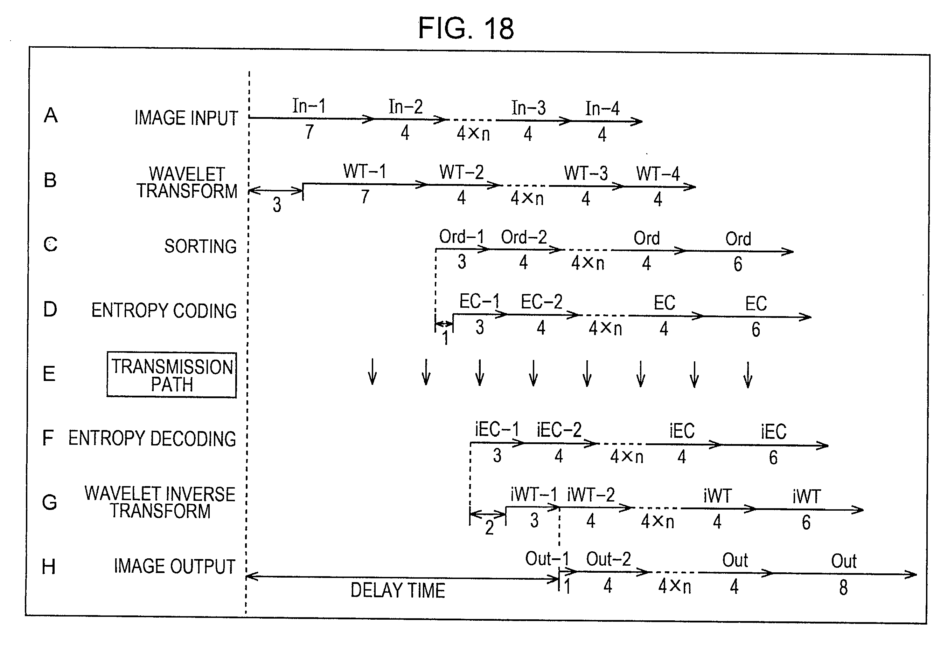

The above various types of processing can by executed, for example, as illustrated in Fig. 18, in parallel as appropriate.

Fig. 18 is a diagram schematically illustrating an example of parallel operation of each element of processing to be executed by each unit of the encoding unit 112 illustrated in Fig. 10, and the decoding unit 133 illustrated in Fig. 15. This Fig. 18 corresponds to the above Fig. 14. Input In-1 (A in Fig. 18) of image data is subjected to first wavelet transform WT-1 (B in Fig. 18) by the wavelet transform unit 211 (Fig. 10). As described with reference to Fig. 13, this first wavelet transform WT-1 is started at a point that the first three lines are input, and a coefficient C1 is generated. That is to say, three lines worth of delay is caused until the wavelet transform WT-1 is started from input of the pixel data In-1.

The generated coefficient data is stored in the coefficient sorting buffer unit 213 (Fig. 10). Hereafter, input image data is subjected to wavelet transform, and upon the first processing being completed, the processing proceeds to the second wavelet transform WT-2 as is.

In parallel with input of image data In-2 for the second wavelet transform WT-2, and processing of this second wavelet transform WT-2 processing, sorting Ord-1 (C in Fig. 18) of three of the coefficient C1, coefficient C4, and coefficient C5 is executed by the coefficient sorting unit 214 (Fig. 1).

Note that the delay until the sorting Ord-1 is started from completion of the wavelet transform WT-1 is delay based on a device or system configuration, for example, such as delay along with propagation of a control signal for instructing the coefficient sorting unit 214 to perform sorting processing, delay necessary for starting the processing of the coefficient storing unit 214 as to the control signal, or delay necessary for the program processing, and is not substantial delay with the encoding processing.

The coefficient data is read out from the coefficient sorting buffer unit 213 in the order of sorting being ended, and is supplied to the entropy coding unit 215 (Fig. 10) where entropy coding EC-1 is performed (D in Fig. 18). This entropy coding EC-1 can be started without awaiting completion of all of storing of the three of the coefficient C1, coefficient C4, and coefficient C5. For example, at a point when sorting of one line according to the coefficient C5 to be output first is completed, entropy coding as to this coefficient C5 can be started. In this case, the delay from processing start of the sorting Ord-1 until processing start of the entropy coding EC-1 is one line worth.

The encoded data of which the entropy coding EC-1 by the entropy coding unit 215 has been completed is subjected to predetermined signal processing, and then transmitted to the decoding unit 133 (Fig. 15) (E in Fig. 18).

As described above, following seven lines worth of image data input by the first processing, image data is sequentially input to the encoding unit 112 up to the lower edge line on the screen. With the encoding unit 112, along with the input In-n (n is equal to or greater than 2) of image data, as described above, wavelet transform WT-n, sorting Ord-n, and entropy coding EC-n are performed for every four lines. The sorting Ord and entropy coding EC as to the final round processing at the encoding unit 112 are performed as to six lines. These processes are performed at the encoding unit 112 in parallel as exemplified in A in Fig.18 through D in Fig. 18.

The encoded data encoded by the entropy coding EC-1 by the encoding unit 112 is supplied to the decoding unit 133 via each unit. The entropy decoding unit 221 (Fig. 15) of the decoding unit 133 sequentially subjects the supplied encoded data encoded by the entropy coding EC-1 to entropy code decoding iEC-1 to restore the coefficient data (F in Fig. 18). The restored coefficient data is sequentially stored in the coefficient buffer unit 222. Upon the coefficient data necessary for performing wavelet inverse transform being stored in the coefficient buffer unit 222, the wavelet inverse transform unit 223 reads out the coefficient data from the coefficient buffer unit 222, and performs wavelet inverse transform iWT-1 using the read coefficient data (G in Fig. 18).

As described with reference to Fig. 13, the wavelet inverse transform iWT-1 by the wavelet inverse transform unit 223 can be started at a point when the coefficient C4 and coefficient C5 are stored in the coefficient buffer unit 222. Accordingly, delay until the wavelet inverse transform iWT-1 by the wavelet inverse transform unit 223 is started since the decoding iEC-1 by the entropy decoding unit 221 is started is two lines worth.

With the wavelet inverse transform unit 223, upon three lines worth of the wavelet inverse transform iWT-1 by the first wavelet transform being completed, the output Out-1 of the image data generated by the wavelet inverse transform iWT-1 is performed (H in Fig. 18). With the output Out-1, as described with reference to Fig. 13 and Fig. 14, the image data of the fist line is output.

Following input of three lines worth of the encoded coefficient data by the first round processing at the encoding unit 112, the coefficient data encoded by the entropy coding EC-n (n is equal to or greater than 2) is sequentially input to the decoding unit 133. The decoding unit 133 subjects, as described above, the input coefficient data to the entropy decoding iEC-n and wavelet inverse transform iWT-n for every four lines, and sequentially performs output Out-n of the image data restored by the wavelet inverse transform iWT-n. The entropy decoding iEC and wavelet inverse transform iWT corresponding to the final round of the encoding unit 112 are performed as to six lines, and with the output Out, eight lines are output. These processes are performed at the decoding unit 133 in parallel as exemplified in F in Fig. 18 through H in Fig. 18.

As described above, each process at the encoding unit 112 and the decoding unit 133 is performed in parallel in the order from the upper to lower direction of the screen, whereby the image compression processing and the image decoding processing can be performed with low delay.

Let us calculate delay time from image input to image output in the event that wavelet transform has been performed up to the division level = 2 using the 5 × 3 filter, with reference to Fig. 18. Delay time since the image data of the first line is input to the encoding unit 112 until the image data of this first line is output from the decoding unit 133 is the summation of each element of the following. Note that, here, delay that differs due to a system configuration, such as delay in a transmission path, delay along with actual processing timing of each unit of the device, and so forth is excluded.

(1) Delay D_WT since the first line input until seven lines worth of wavelet transform WT-1 is completed
(2) Time D_Ord along with three lines worth of coefficient sorting Ord-1
(3) Time D_EC along with three lines worth of entropy coding EC-1
(4) Time D_iEC along with three lines worth of entropy decoding iEC-1
(5) Time D_iWT along with three lines worth of wavelet transform iWT-1

Let us try calculation of delay due to each element described above, with reference to Fig. 18. The delay D_WT in (1) is 10 lines worth of time. Each of the time D-Ord in (2), the time D_EC in (3), the time D_iEC in (4), and the time D_iWT in (5) is three lines worth of time. Also, the encoding unit 112 can start the entropy coding EC-1 after one line since the sorting Ord-1 was started. Similarly, the decoding unit can start the wavelet inverse transform iWT-1 after two lines since the entropy decoding iEC-1 was started. Also, the entropy decoding iEC-1 can start processing at a point when one line worth of encoding is completed with the entropy coding EC-1.

Accordingly, with the present example in Fig. 18, delay time since the image data of the first line was input to the encoding unit 112 until the image data of this fist line is output from the decoding unit 133 is 10 + 1 + 1 + 2 + 3 = 17 lines worth.

Let us examine regarding delay time by exemplifying a more specific example. In the event that input image data is an HDTV (High Definition Television) interlace video signal, on frame is made up of, for example, resolution of 1920 pixels × 1080 lines, and one field is 1920 pixels × 540 lines. Accordingly, if we say that the frame frequency is 30 Hz, the 540 lines of one field are input to the encoding unit 112 during time of 16.67 msec.(= 1 sec / 60 fields).

Accordingly, delay time along with input of seven lines worth of image data is 0.216 msec. (= 16.67 msec. × 7 / 540 lines), so is extremely short time, for example, as to the updating time of one field. Also, with regard to the summation of the above delay D_WT in (1), the time D_Ord in (2), the time D_EC in (3), the time D_iEC in (4), and the time D_iWT in (5), the number of lines to be processing is small, so delay time is extremely reduced.

As described above, in the event of applying a low-delay encoding method for performing encoding in increments of pictures or less, maintenance of a low delay property is particularly important. With the information processing system 100, as described above, low-delay transmission synchronous playback of an image can be realized in a surer manner. Specifically, the information processing system 100 can realize low-delay transmission while dynamically changing the frame rate so as to prevent the image from failing, whereby an even greater advantage can be provided.

Note that the encoding/decoding method is basically arbitrary, so may be another method other than the above method. For example, another intra frame encoding method such as Motion JPEG (Joint Photographic Experts Group) or the like may be employed, or an inter frame encoding method such as ITU-T (International Telecommunication Union Telecommunication Standardization Sector) H.264 or the like may be employed.

It goes without saying that the image data of a baseband may be transmitted from the transmission device 101 to the reception device 102 without encoding.

3. Third Embodiment

Configuration of Devices

Also, description has been made above wherein the transmission device 101 updates the timestamp value, but regardless of this, synchronous playback point-in-time (substantially the same synchronous playback point-in-time as with the first embodiment) to which updating of the timestamp is reflected may be calculated from information such as the frame rate or the like at the reception device 102.

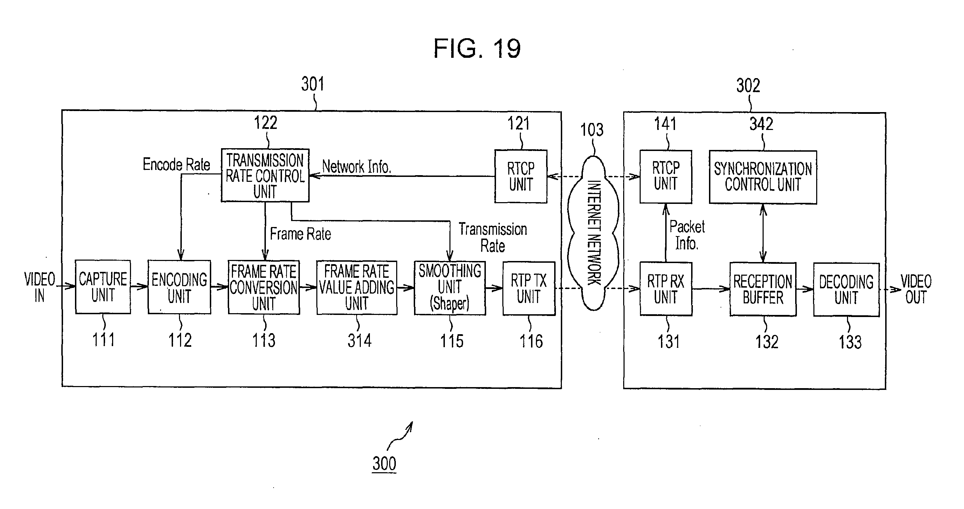

Fig. 19 is a block diagram illustrating another configuration example of the information processing system to which the present invention has been applied.

The information processing system 300 illustrated in Fig. 19 corresponds to the information processing system 100 in Fig. 4. Specifically, the information processing system 300 is a system, in the same way as with the information processing system 100, for performing low-delay transmission synchronous playback of a moving image from the transmission device 301 to a reception device 302 via the Internet network 103.

The transmission device 301 corresponds to the transmission device 101 in Fig. 4. The transmission device 301 has basically the same configuration as the transmission device 101, but includes a frame rate value adding unit 314 instead of the timestamp control unit 114.

The frame rate value adding unit 314 obtains a RTP packet of encoded data subjected to frame rate conversion from the frame rate conversion unit 113, and also receives a notification of a transmission frame rate f_t (fps) after conversion from the frame rate conversion unit 113.

The frame rate value adding unit 314 adds information indicating the transmission frame rate f_t (fps) thereof notified from the frame rate conversion unit 113 to the RTP packet of the encoded data. The frame rate value adding unit 314 supplies the packet to which the frame rate value is added to the smoothing unit 115.

That is to say, with the first embodiment, the updated timestamp is supplied from the transmission device 101 to the reception device 102, on the other hand, with the present embodiment, the timestamp before updating, and the frame rate value after conversion are supplied from the transmission device 301 to the reception device 302.

The reception device 302 corresponds to the reception device 102 in Fig. 14. The reception device 302 has basically the same configuration as the reception device 102, but includes a synchronization control unit 342 instead of the synchronization control unit 142.

The synchronization control unit 342 calculates, as to a packet (encoded data) held in the reception buffer 132, synchronous playback point-in-time corresponding to smoothing of the transmission rate from the timestamp value and frame rate value added to the packet thereof and transmitted from the transmission device 301, and the sampling frame rate of the capture unit 111.

Specifically, in the case of the present embodiment, instead of the timestamp being updated on the transmission device side, the synchronization control unit 342 of the reception device 302 obtains a frame thinning-out rate M from the transmission frame rate f_t (fps) and the sampling frame rate f_s (fps). The synchronization control unit 342 calculates synchronous playback point-in-time from this value, and the timestamp value TS added to the encoded block data. The calculated synchronous playback point-in-time is basically the same as with that according to the above embodiments.

That is to say, with this synchronous playback point-in-time as well, the processing timing of each packet at the time of a low frame rate is adjusted in accordance with smoothing of the transmission rate so as to prevent the image from failing.

Flow of Processing

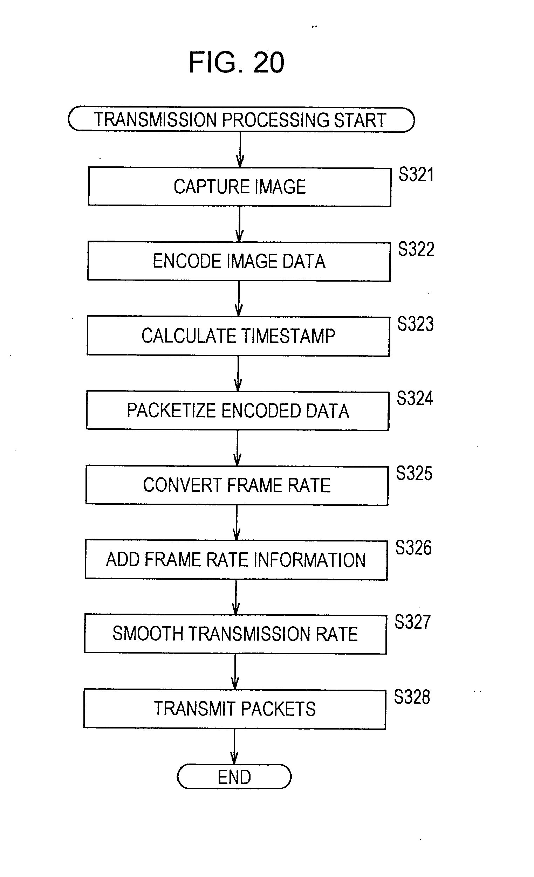

An example of the flow of transmission processing to be executed by the transmission device 301 will be described with reference to the flowchart in Fig. 20. This transmission processing corresponds to the flowchart in Fig. 7.

As described above, in the event of the present embodiment as well, the transmission processing is executed basically in the same way as with the case described with reference to the flowchart in Fig. 7. Accordingly, each process of step S321 through step S325 in Fig. 20 is executed in the same way as step S121 through step S125 in Fig. 7.

In step S326, the frame rate value adding unit 314 adds frame rate information indicating the frame rate value (transmission frame rate f_t (frame/sec)) after conversion to the packet header or the like of the encoded data.

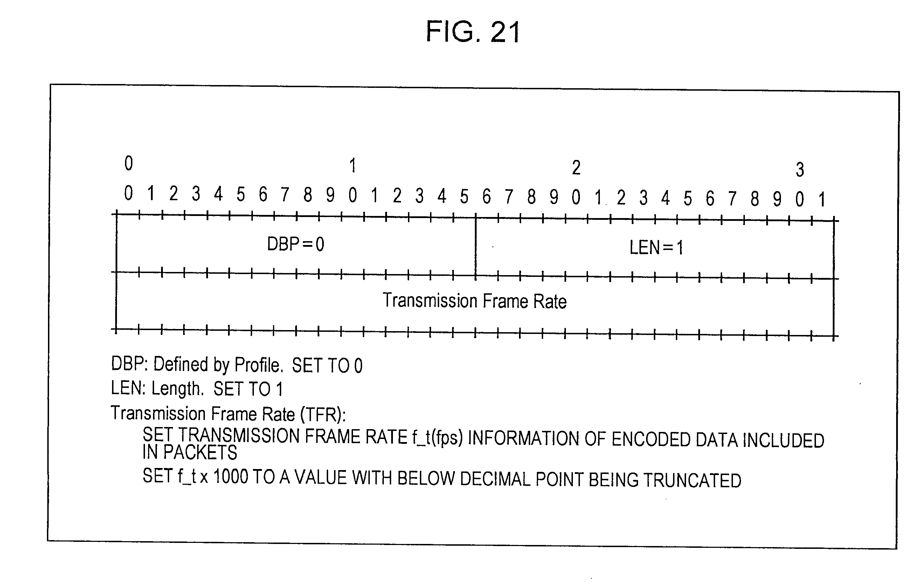

Fig. 21 is a diagram for describing the way in which addition of the transmission frame rate is performed.

The frame rate information is stored in, for example, an RTP extension header (RTP Extension Header) in a format illustrated in Fig. 21. The frame rate value adding unit 314 sets, as illustrated in Fig. 21, the value of DBP (Defined by Profile) to "0", and sets the value of LEN (Length) to "1". The frame rate value adding unit 314 further provides a TFR (Transmission Frame Rate) to 32 bits thereafter, and sets the transmission frame rate f_t (fps) thereto. For example, the transmission frame rate f_t is multiplied by 1000, and a value obtained by truncating below a decimal point from the multiplication result is added thereto.

Each process of step S327 and step S328 is executed in the same way as with each process of step S127 and step S128 in Fig. 7.

Upon the packet being transmitted in step S328, the transmission processing is ended. As described above, each packet is sequentially transmitted. In this case as well, the processing of each step described above is executed as soon as preparations have been completed, and also the processing is repeated as to the next data as soon as the processing at each processing units has been completed. Accordingly, in this case as well, the above each process is executed in parallel as appropriate.

Note that the smoothing processing may be performed at a relay device, for example, such as a router, an Ethernet (registered trademark) Switch, or the like, which is outside the transmission device 101.

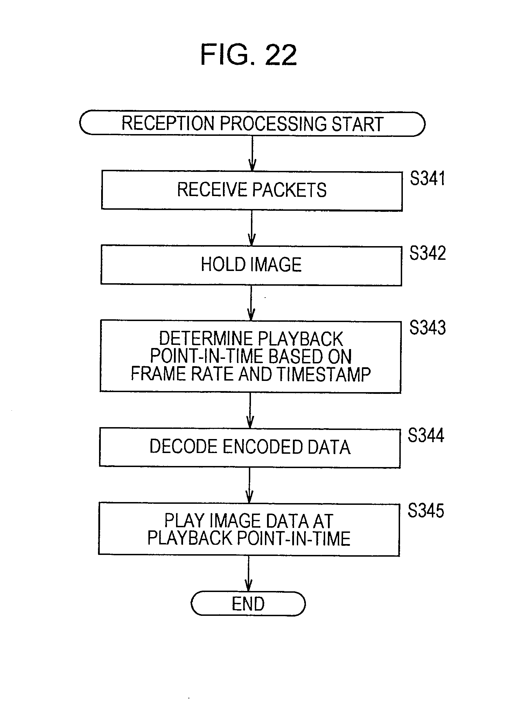

Next, an example of the flow of reception processing to be executed by the reception device 302 will be described with reference to the flowchart in Fig. 22. This reception processing corresponds to the flowchart in Fig. 8.

As described above, in the event of the present embodiment as well, the reception processing is executed basically in the same way as with the case described with reference to the flowchart in Fig. 8. Accordingly, each process of step S341 and step S342 in Fig. 22 is executed in the same way as step S141 and step S142 in Fig. 8.

In step S343, the synchronization control unit 342 determines, as to a packet held in the reception buffer 132, playback point-in-time using not only the timestamp value (timestamp value before updating) but also the transmission frame rate f_t (fps) notified from the transmission device 101, and the sampling frame rate of the capture unit 111 held in the reception device 102 beforehand.

The synchronization control unit 342 calculates the frame thinning-out rate M, for example, as shown in the following Expression (13).

[Mathematical Expression 8]

$$M = f\_s \ \mathrm{div} \ f\_t \qquad \cdots (13)$$

In the same way as with the case of the first embodiment, the synchronization control unit 342 calculates playback point-in-time of encoded block data matching the final frame data of the frame data subjected to frame thinning-out immediately after frame data including encoded block data B to be played. The synchronization control unit 342 calculates the playback point-in-time T2_p(TS) as shown in the following Expression (14).

[Mathematical Expression 9]

$$T2_p(TS) = T_p(TS) + \frac{(M-1)}{f\_s} \qquad \cdots (14)$$

Note that T_p(TS) is the playback point-in-time of Expression (9), and is playback point-in-time to be obtained from the timestamp. In the case of the present embodiment, the Tp(TS) is playback point-in-time to be obtained from the timestamp corresponding to the sampling rate. That is to say, playback point-in-time T2_p(TS) is obtained by adding a correction value (((f_s div f_t) - 1) / f_s) to be calculated from the sampling frame rate and the transmission frame rate to playback point-in-time to be obtained from the timestamp.

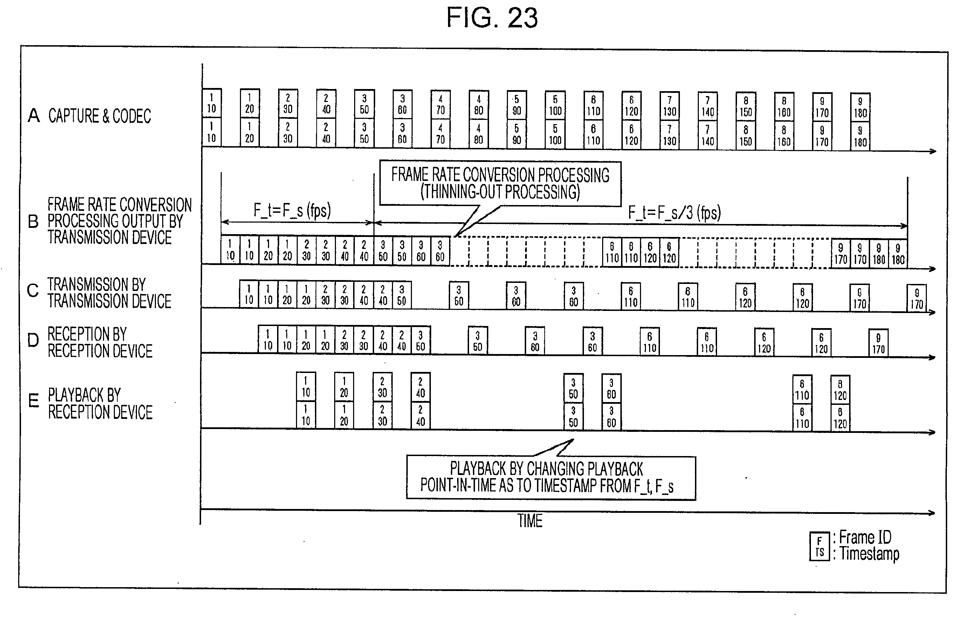

Each of the data is played at the playback point-in-time T2_p(TS), thereby enabling playback at the same timing as with the case of the first embodiment as illustrated in the time chart example in Fig. 23.

That is to say, the information processing system 300 can also realize low-delay transmission synchronous playback of an image in a surer manner.

Note that description has been made above wherein the reception device 302 realizes the sampling frame rate at the capture unit 111 beforehand, but regardless of this, the sampling frame rate information may be transmitted from the transmission device 301 to the reception device 302. In this case, the sampling frame rate information should be transmitted along with the above transmission frame rate information.

Also, the frame rate information may be set to a field other than the RTP extension header (RTP Extension Header) of an RTP packet. Also, the frame rate information may be added to another packet and transmitted, or may be transmitted by another transmission method.

It goes without saying that, in the case of the present embodiment as well, in the same way as with the first embodiment, instead of the timestamp, information other than the timestamp, in sync with the sampling point-in-time of each frame of moving image data, for example, such as a frame ID, an intra frame block ID, or the like may be employed.

4. Fourth Embodiment

Configuration of Devices

Further, the transmission device 101 may transmit, instead of the frame rate information, a frame skip count indicating the number of frames thinned out in the frame conversion to the reception device 102. In this case, the reception device 102 uses the frame skip count thereof to calculate synchronous playback point-in-time (substantially the same synchronous playback point-in-time as with the case of the first embodiment) to which updating of the timestamp value has been reflected.

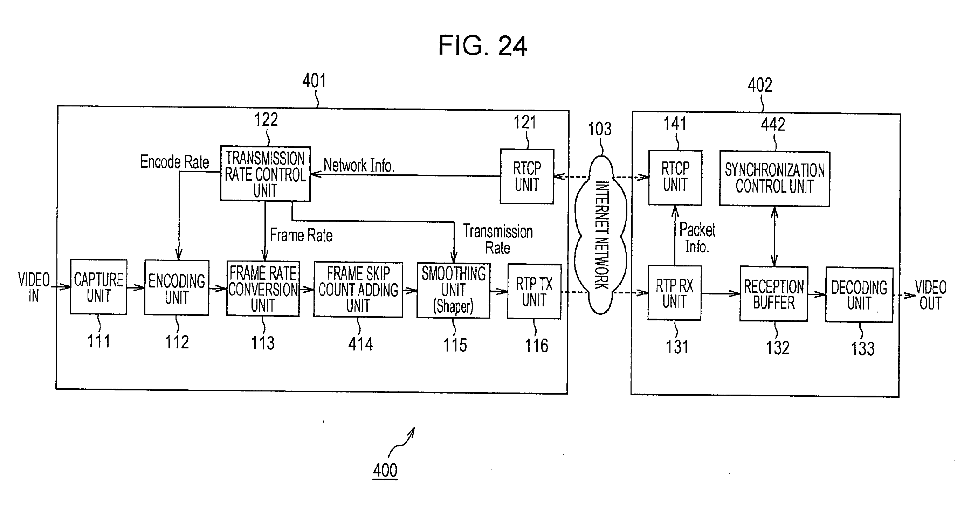

Fig. 24 is a block diagram illustrating yet another configuration example of the information processing system to which the present invention has been applied.

The information processing system 400 illustrated in Fig. 24 corresponds to the information processing system 100 in Fig. 4. Specifically, the information processing system 400 is, in the same way as with the case of the information processing system 100, a system for performing low-delay transmission synchronous playback of a moving image from a transmission device 401 to a reception device 402 via the Internet network 103.

The transmission device 401 corresponds to the transmission device 101 in Fig. 4. The transmission device 401 has basically the same configuration as with the transmission device 101, but has a frame skip count adding unit 414 instead of the timestamp control unit 114.

The frame skip count adding unit 414 obtains an RTP packet of encoded data subjected to frame rate conversion (subjected to frame thinning-out processing) from the frame rate conversion unit 113, and also receives a notification of a frame skip count N_s (frame) indicating the number of frames thinned out at the time of frame rate conversion from the frame rate conversion unit 113.

More specifically, the frame skip count indicates the number of frames before conversion existing between frame data after conversion and the next frame data after conversion, and is represented with M - 1 if the frame thinning-out rate is taken as M.

The frame skip count adding unit 414 adds information indicating the frame skip count N_s (frame) notified from the frame rate conversion unit 113 to an RTP packet of the encoded data. The frame skip count adding unit 414 supplies the packet to which the frame skip count has been added to the smoothing unit 115.

That is to say, with the first embodiment, the updated timestamp is supplied from the transmission device 101 to the reception device 102, but on the other hand, with the present embodiment, the timestamp before updating, and the frame skip count are supplied from the transmission device 401 to the reception device 402.

The reception device 402 corresponds to the reception device 102 in Fig. 4. The reception device 402 has basically the same configuration as with the reception device 102, but includes a synchronization control unit 442 instated of the synchronization control unit 142.

The synchronization control unit 442 calculates, as to a packet (encoded data) held in the reception buffer 132, synchronous playback point-in-time corresponding to smoothing of the transmission rate from the timestamp value and frame skip count added to the packet thereof and transmitted from the transmission device 401, and the sampling frame rate of the capture unit 111.

Specifically, in the case of the present embodiment, instead of the timestamp being updated on the transmission device side, the synchronization control unit 442 of the reception device 402 calculates synchronous playback point-in-time from the frame skip count N_s (frame), the sampling frame rate f_s (fps), and the timestamp value TS. The calculated synchronous playback point-in-time is basically the same as with that according to the above embodiments.

That is to say, with this synchronous playback point-in-time as well, the processing timing of each packet at the time of a low frame rate is adjusted in accordance with smoothing of the transmission rate so as to prevent the image from failing.

Flow of Processing

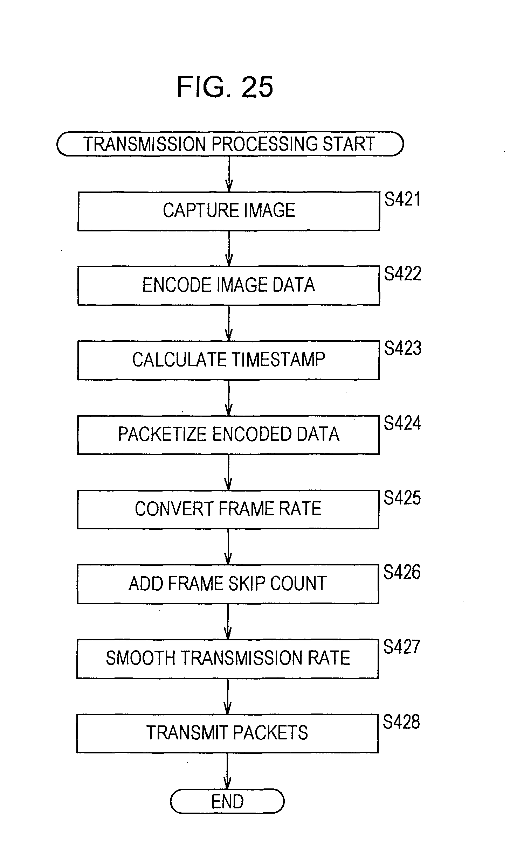

Fig. 25 is a flowchart for describing yet another example of the flow of the transmission processing. This transmission processing corresponds to the flowchart in Fig. 7.

As described above, in the event of the present embodiment as well, the transmission processing is executed basically in the same way as with the case described with reference to the flowchart in Fig. 7. Accordingly, each process of step S421 through step S425 in Fig. 20 is executed in the same way as step S121 through step S125 in Fig. 7.

In step S426, the frame skip count adding unit 414 adds the frame skip count N_s (frame) to the packet header or the like of the encoded data.

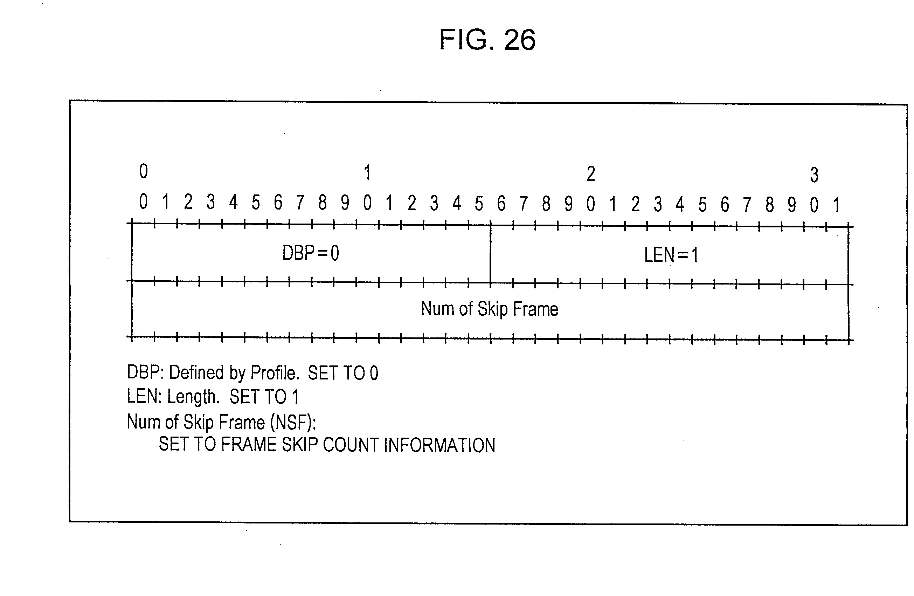

Fig. 26 is a diagram for describing the way in which addition of the frame skip count is performed.

The frame skip count is stored in, for example, an RTP extension header (RTP Extension Header) in a format illustrated in Fig. 26. The frame skip count adding unit 414 sets, as illustrated in Fig. 26, the value of DBP (Defined by Profile) to "0", and sets the value of LEN (Length) to "1". The frame skip count adding unit 414 further provides an NSF (Num of Skip Frame) to 32 bits thereafter, and sets the frame skip count $N_s$ (frame) thereto.

Each process of step S427 and step S428 is executed in the same way as with each process of step S127 and step S128 in Fig. 7.

Upon the packet being transmitted in step S428, the transmission processing is ended. As described above, each packet is sequentially transmitted. In this case as well, the processing of each step described above is executed as soon as preparations have been completed, and also the processing is repeated as to the next data as soon as the processing at each processing units has been completed. Accordingly, in this case as well, the above each process is executed in parallel as appropriate.

Note that the smoothing processing may be performed at a relay device, for example, such as a router, an Ethernet (registered trademark) Switch, or the like, which is outside the transmission device 101.

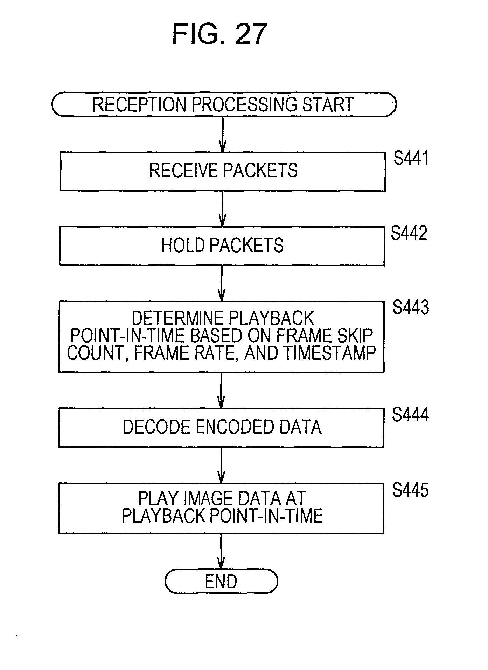

Next, an example of the flow of reception processing to be executed by the reception device 402 will be described with reference to the flowchart in Fig. 27. This reception processing corresponds to the flowchart in Fig. 8.

As described above, in the event of the present embodiment as well, the reception processing is executed basically in the same way as with the case described with reference to the flowchart in Fig. 8. Accordingly, each process of step S441 and step S442 in Fig. 27 is executed in the same way as step S141 and step S142 in Fig. 8.

In step S443, the synchronization control unit 442 determines, as to a packet held in the reception buffer 132, playback point-in-time using not only the timestamp value (timestamp value before updating) but also the frame skip count $N_s$ (frame) notified from the transmission device 101, and the sampling frame rate of the capture unit 111 held in the reception device 102 beforehand.

In the same way as with the case of the first embodiment, the synchronization control unit 442 calculates playback point-in-time of encoded block data matching the final frame data of the frame data subjected to frame thinning-out immediately after frame data including encoded block data B to be played. The synchronization control unit 442 calculates the playback point-in-time $T3_{\_p}(TS)$ as shown in the following Expression (15).

[Mathematical Expression 10]

$$T3_p(TS) = T_p(TS) + \frac{N\_s}{f\_s} \qquad \cdots (15)$$

Note that $T_{\_p}(TS)$ is the playback point-in-time of Expression (9), and is playback point-in-time to be obtained from the timestamp. In the case of the present embodiment, the $T_p(TS)$ is playback point-in-time to be obtained from the timestamp corresponding to the sampling rate. That is to say, playback point-in-time $T3_{\_p}(TS)$ is obtained by adding a correction value ($N\_s / f\_s$) to be calculated from the sampling frame rate and the frame skip count to playback point-in-time to be obtained from the timestamp.

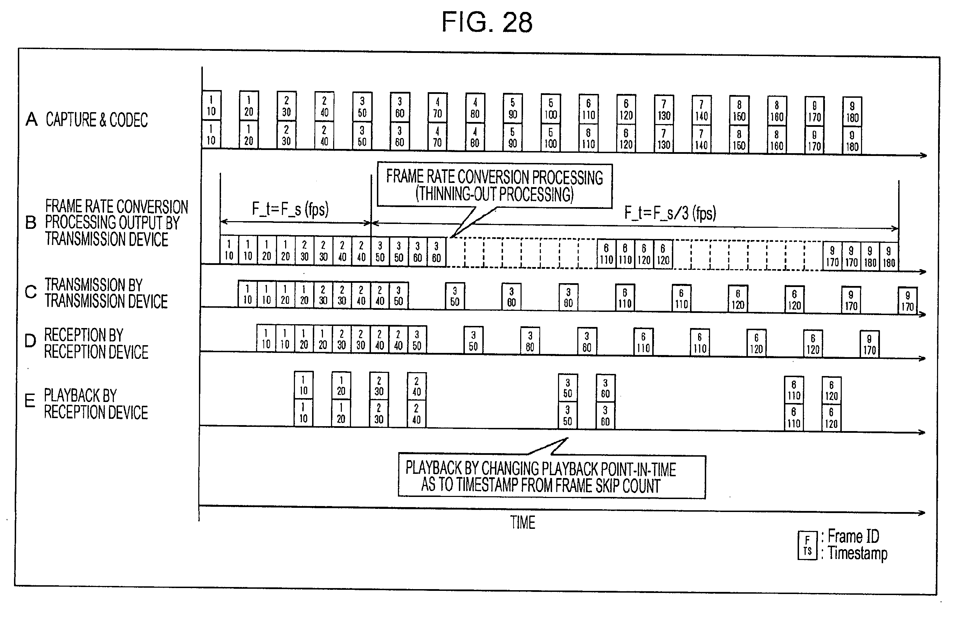

Each of the data is played at the playback point-in-time $T3_{\_p}(TS)$, thereby enabling playback at the same timing as with the case of the first embodiment as illustrated in the time chart example in Fig. 28.

Note that description has been made above wherein the reception device 402 realizes the sampling frame rate at the capture unit 111 beforehand, but regardless of this, the sampling frame rate information may be transmitted from the transmission device 401 to the reception device 402. In this case, the sampling frame rate information should be transmitted along with the above frame skip count.

Also, the frame skip count may be set to a field other than the RTP extension header (RTP Extension Header) of an RTP packet. Also, the frame skip count may be added to another packet and transmitted, or may be transmitted by another transmission method.

It goes without saying that, in the case of the present embodiment as well, in the same way as with the first embodiment, instead of the timestamp, information other than the timestamp, in sync with the sampling point-in-time of each frame of moving image data, for example, such as a frame ID, an intra frame block ID, or the like may be employed.

5. Fifth Embodiment

Personal Computer

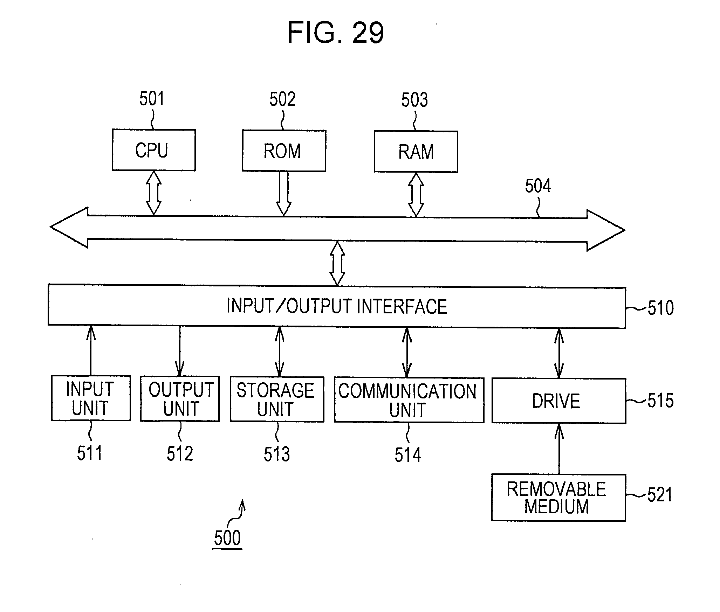

The above series of processing may be executed by hardware, and may also be executed by software. In this case, for example, the above series of processing may be configured as a personal computer as illustrated in Fig. 29.

In Fig. 29, a CPU (Central Processing Unit) 501 of a personal computer 500 executes various types of processing in accordance with a program stored in ROM (Read Only Memory) 502, or a program loaded from a storage unit 513 to RAM (Random Access Memory) 503. Data necessary for the CPU 501 executing various types of processing, and so forth are also stored in the RAM 503 as appropriate.

The CPU 501, ROM 502, and RAM 503 are mutually connected via a bus 504. An input/output interface 510 is also connected to this bus 504.

An input unit 511 made up of a keyboard, a mouse, and so forth, an output unit 512 made up of a display such as CRT (Cathode Ray Tube) or LCD (Liquid Crystal Display) or the like, a speaker, and so forth, a storage unit 513 configured of a hard disk and so forth, and a communication unit 514 configured of a modem and so forth, are connected to the input/output interface 510. The communication unit 514 performs communication processing via a network including the Internet.

A drive 515 is also connected to the input/output interface 510 according to need, on which a removable medium 521 such as a magnetic disk, an optical disc, a magneto-optical disk, semiconductor memory, or the like is mounted as appropriate, and a computer program read out therefrom is installed into the storage unit 513 according to need.

In the event that the above series of processing is executed by software, a program making up the software thereof is installed from a network or recording medium.

This recording medium is, for example, as illustrated in Fig. 29, apart from the device main unit, not only configured of the removable medium 521 made up of a magnetic disk (including a flexible disk), an optical disc (including CD-ROM (Compact Disc - Read Only Memory), DVD (Digital Versatile Disc)), a magneto-optical disk (including MD (Mini Disc)), semiconductor memory, or the like, which is distributed for distributing the program to a user, but also the ROM 502 in which the program is recorded, a hard disk included in the storage unit 513, or the like, which is distributed to a user in a state embedded in the device main unit beforehand.

Note that the program that the computer executes may be a program for performing processing in time sequence in accordance with the sequence described in the present Specification, or may be a program for performing processing in parallel or at necessary timing such as at the time of call-up being performed, or the like.

Also, with the present Specification, steps for describing the program to be recorded in a recoding medium include not only processing to be performed in a time-oriented manner along with the described sequence, but also processing to be performed in parallel or individually even though not necessarily be performed in a time-oriented sequence.

Also, with the present Specification, the term "system" represents the entire device made up of multiple devices.

Also, the configuration described above as a single device (or processing unit) may be configured as multiple devices (or processing units) by being divided. Conversely, the configuration described above as multiple devices may be configured as a single device (or processing unit) by being collected. Also, it goes without saying that a configuration other than described above may be added to the configuration of each device (or each processing unit). Further, the configuration and operation as the entire system are substantially the same, a part of the configuration of a certain device (or processing unit) may be included in the configuration of another device (or another processing unit). That is to say, embodiments of the present invention are not restricted to the above-mentioned embodiments, and various modifications can be made without departing from the essence and spirit of the present invention.

Reference Signs List

100    information processing system
101    transmission device
102    reception device
111    capture unit
112    encoding unit
113    frame rate conversion unit
114    timestamp control unit
115    smoothing unit
116    RTP transmission unit

| | |
|---|---|
| 121 | RTCP unit |
| 122 | transmission rate control unit |
| 131 | RTP reception unit |
| 132 | reception buffer |
| 133 | decoding unit |
| 141 | RTCP unit |
| 142 | Synchronization control unit |
| 211 | wavelet transform unit |
| 212 | midterm calculation buffer unit |
| 213 | coefficient sorting buffer unit |
| 214 | coefficient sorting unit |
| 215 | entropy coding unit |
| 216 | timestamp calculating unit |
| 217 | packetizing unit |
| 300 | information processing system |
| 301 | transmission device |
| 302 | reception device |
| 314 | frame rate value adding unit |
| 342 | synchronization control unit |
| 400 | information processing system |
| 401 | transmission device |
| 402 | reception device |
| 414 | frame skip count adding unit |
| 442 | synchronization control unit |

**Claims**

1. An information processing device comprising:

   frame rate conversion means configured to convert the frame rate of moving image data with a timestamp in sync with sampling point-in-time being assigned to each frame;
   updating means configured to update said timestamp of each frame after said frame rate conversion to a point-in-time between after said frame rate conversion and a timestamp before updating of the next frame, in accordance with frame conversion by said frame rate conversion means; and
   transmission means configured to transmit said moving image data of which said timestamp has been updated by said updating means to another information processing device configured to determine the playback point-in-time of each frame based on said timestamp.

2. The information processing device according to Claim 1, wherein said updating means update said timestamp of each frame after said frame rate conversion to the timestamp of a frame positioned one frame before as viewed from the next frame after said frame rate conversion in a state before said frame rate conversion.

3. The information processing device according to Claim 1, wherein said frame rate conversion means convert said frame rate into a desired frame rate by thinning out part of frame data from said moving image data.

4. The information processing device according to Claim 1, wherein said frame rate conversion means convert said frame rate into a desired frame rate by subjecting a plurality of frames of said moving image data to image synthesizing.

5. The information processing device according to any of Claim 1 through Claim 4, wherein said frame rate conversion means convert the frame rate of moving image data with an ID value in sync with the sapling point-in-time of each frame being assigned for each of predetermined data units;
   and wherein said updating means update said ID value after said frame rate conversion according to frame rate conversion by said frame rate conversion means;
   and wherein said transmission means transmit said moving image data with said ID value being updated by said updating means to another information processing device configured to determine the playback point-in-time of each frame based on said ID value.

**6.** An information processing method comprising:

converting, with frame rate conversion means, the frame rate of moving image data with a timestamp in sync with sampling point-in-time being assigned to each frame;

updating, with updating means, said timestamp of each frame after frame rate conversion to a point-in-time between after said frame rate conversion and a timestamp before updating of the next frame in accordance with frame conversion; and

transmitting, with transmission means, said moving image data of which said timestamp has been updated to another information processing device configured to determine the playback point-in-time of each frame based on said timestamp.

**7.** An information processing device comprising:

frame rate conversion means configured to convert the frame rate of moving image data with a timestamp in sync with sampling point-in-time being assigned to each frame;

adding means configured to add frame information that is information, which includes at least any one of a frame rate after frame rate conversion by said frame rate conversion means, and a frame skip count indicating the number of frames eliminated through frame rate conversion by said frame rate conversion means, for determining said frame rate conversion, to said moving image data subjected to said frame rate conversion by said frame rate conversion means; and

transmission means configured to transmit said moving image data to which said frame information has been added by said adding means to another information processing device configured to determine the playback point-in-time of each frame based on said timestamp, the sampling rate of said moving image data, and said frame rate after frame rate conversion included in said frame information, or said frame skip count.

**8.** The information processing device according to Claim 7, wherein said frame rate conversion means convert the frame rate of moving image data with an ID value in sync with the sampling point-in-time of each frame being assigned for each of predetermined data units;

and wherein said transmission means transmit said moving image data to which said frame information has been added by said adding means to another information processing device configured to determine the playback point-in-time of each frame based on said ID value, the sampling rate of said moving image data, and a frame rate after said frame rate conversion included in said frame information, or said frame skip count.

**9.** An information processing method comprising:

converting, with frame rate conversion means, the frame rate of moving image data with a timestamp in sync with sampling point-in-time being assigned to each frame;

adding, with adding means, frame information that is information identifying said frame rate conversion, which includes at least any one of a frame rate after frame rate conversion, and a frame skip count indicating the number of frames eliminated by frame rate conversion, to said moving image data subjected to said frame rate conversion; and

transmitting, with transmission means, said moving image data to which said frame information has been added to another information processing device configured to determine the playback point-in-time of each frame based on said timestamp, the sampling rate of said moving image data, and said frame rate after frame rate conversion, or said frame skip count included in said frame information.

**10.** An information processing device comprising:

reception means configured to receive moving image data to which frame information that is information, which includes a timestamp in sync with the sampling point-in-time of each frame, transmitted from another information processing device, and at least any one of a frame rate after frame rate conversion, and a frame skip count indicating the number of frames eliminated by frame rate conversion, for determining said frame rate conversion, has been added; and

playback point-in-time determining means configured to determine the playback point-in-time of each frame of said moving image data received by said reception means using said timestamp, the sampling rate of said moving image data, and said frame rate after frame rate conversion, or said frame skip count included in said frame information.

11. The information processing device according to Claim 10, wherein said playback point-in-time determining means divide a value obtained by subtracting 1 from the integer value of a quotient obtained by dividing said sampling rate by said framed rate included in said frame information, by said sampling rate to determine point-in-time delayed for said division result worth from playback point-in-time calculated from said timestamp to be said playback point-in-time.

12. The information processing device according to Claim 10, wherein said playback point-in-time determining means determine point-in-time delayed for division result worth by dividing said frame skip count included in said frame information by the sampling frame rate of said moving image data, from playback point-in-time calculated from said timestamp to be said playback point-in-time.

13. The information processing device according to any of Claim 10 through Claim 12, wherein said reception means receive moving image data to which an ID value for each of predetermined data units in sync with the sampling point-in-time of each frame, and said frame information, transmitted from another information processing device, have been added;

and wherein said playback point-in-time determining means determine the playback point-in-time of each frame of said moving image data received by said reception means using said ID value, the sampling rate of said moving image data, and said frame rate after frame rate conversion, or said frame skip count included in said frame information.

14. An information processing method comprising:

receiving, with reception means, moving image data to which frame information that is information, which includes a timestamp in sync with the sampling point-in-time of each frame, transmitted from another information processing device, and at least any one of a frame rate after frame rate conversion performed by said other information processing device, and a frame skip count indicating the number of frames eliminated by frame rate conversion, for determining said frame rate conversion, has been added; and

determining, with playback point-in-time determining means, the playback point-in-time of each frame of said moving image data received using said timestamp, the sampling rate of said moving image data, and said frame rate after frame rate conversion, or said frame skip count included in said frame information.

FIG. 1

# FIG. 2

A  CAPTURE & CODEC

B  FRAME RATE CONVERSION PROCESSING OUTPUT BY TRANSMISSION DEVICE

FRAME RATE CONVERSION PROCESSING (THINNING-OUT PROCESSING)

F_t=F_s (fps)

F_t=F_s/3 (fps)

C  TRANSMISSION BY TRANSMISSION DEVICE

D  RECEPTION BY RECEPTION DEVICE

E  PLAYBACK BY RECEPTION DEVICE

AT THIS POINT, HEREAFTER VIDEO FAILS SINCE SECOND PACKET OF Frame ID=3 HAS NOT ARRIVED.

TIME

F/TS : Frame ID / Timestamp

# FIG. 3

A  CAPTURE & CODEC

B  FRAME RATE CONVERSION PROCESSING OUTPUT BY TRANSMISSION DEVICE

FRAME RATE CONVERSION PROCESSING (THINNING-OUT PROCESSING)

$F\_t=F\_s$ (fps)

$F\_t=F\_s/3$ (fps)

C  TRANSMISSION BY TRANSMISSION DEVICE

D  RECEPTION BY RECEPTION DEVICE

E  PLAYBACK BY RECEPTION DEVICE

THERE IS UNNECESSARY DELAY AT THE TIME OF HIGH FRAME RATE

THE ENTIRE IS DELAYED IN ACCORDANCE WITH LOW FRAME RATE TRAILING PACEKET RECEPTION POINT-IN-TIME

TIME

F : Frame ID
TS : Timestamp

EP 2 437 493 A1

# FIG. 4

EP 2 437 493 A1

# FIG. 5

```
( RATE CONTROL PROCESSING START )
              │
              ▼
┌─────────────────────────────────┐ S101
│   DETERMINE TRANSMISSION RATE   │
└─────────────────────────────────┘
              │
              ▼
┌─────────────────────────────────┐ S102
│      DETERMINE FRAME RATE       │
└─────────────────────────────────┘
              │
              ▼
┌─────────────────────────────────┐ S103
│    DETERMINE ENCODING RATE      │
└─────────────────────────────────┘
              │
              ▼
          ( END )
```

# FIG. 6

RESOLUTION: 1920×1080

EP 2 437 493 A1

# FIG. 7

```
( TRANSMISSION PROCESSING START )
              │
              ▼
    ┌─────────────────────────┐  S121
    │      CAPTURE IMAGE       │
    └─────────────────────────┘
              │
              ▼
    ┌─────────────────────────┐  S122
    │    ENCODE IMAGE DATA     │
    └─────────────────────────┘
              │
              ▼
    ┌─────────────────────────┐  S123
    │    CALCULATE TIMESTAMP   │
    └─────────────────────────┘
              │
              ▼
    ┌─────────────────────────┐  S124
    │   PACKETIZE ENCODED DATA │
    └─────────────────────────┘
              │
              ▼
    ┌─────────────────────────┐  S125
    │    CONVERT FRAME RATE    │
    └─────────────────────────┘
              │
              ▼
    ┌─────────────────────────┐  S126
    │     UPDATE TIMESTAMP     │
    └─────────────────────────┘
              │
              ▼
    ┌─────────────────────────┐  S127
    │  SMOOTH TRANSMISSION RATE │
    └─────────────────────────┘
              │
              ▼
    ┌─────────────────────────┐  S128
    │     TRANSMIT PACKETS     │
    └─────────────────────────┘
              │
              ▼
          (   END   )
```

# FIG. 8

```
┌────────────────────────────────────────┐
(   RECEPTION PROCESSING START   )
└────────────────────────────────────────┘
                    │
                    ▼
        ┌───────────────────────┐  S141
        │    RECEIVE PACKETS     │
        └───────────────────────┘
                    │
                    ▼
        ┌───────────────────────┐  S142
        │     HOLD PACKETS       │
        └───────────────────────┘
                    │
                    ▼
        ┌───────────────────────┐  S143
        │ DETERMINE SYNCHRONOUS  │
        │  PLAYBACK POINT-IN-TIME │
        │   BASED ON TIMESTAMP   │
        └───────────────────────┘
                    │
                    ▼
        ┌───────────────────────┐  S144
        │  DECODE ENCODED DATA   │
        └───────────────────────┘
                    │
                    ▼
        ┌───────────────────────┐  S145
        │   PLAY IMAGE DATA AT   │
        │  SYNCHRONOUS PLAYBACK  │
        │     POINT-IN-TIME      │
        └───────────────────────┘
                    │
                    ▼
              (   END   )
```

# FIG. 9

A CAPTURE & CODEC

B FRAME RATE CONVERSION PROCESSING OUTPUT BY TRANSMISSION DEVICE

FRAME RATE CONVERSION PROCESSING (THINNING-OUT PROCESSING)

$F\_t=F\_s$ (fps)    $F\_t=F\_s/3$ (fps)

C TIMESTAMP CONTROL PROCESSING OUTPUT

D TRANSMISSION BY TRANSMISSION DEVICE

E RECEPTION BY RECEPTION DEVICE

F PLAYBACK BY RECEPTION DEVICE

SYNCHRONOUS PLAYBACK WITH LOW DELAY AT THE TIME OF HIGH FRAME RATE

PLAYBACK WITHOUT FAILURE IN ACCORDANCE WITH TIMESTAMP EVEN AT THE TIME OF LOW FRAME RATE

TIME

$\boxed{\begin{smallmatrix}F\\TS\end{smallmatrix}}$ : Frame ID / : Timestamp

EP 2 437 493 A1

# FIG. 10

IMAGE DATA → WAVELET TRANSFORM UNIT (211) → COEFFICIENT SORTING UNIT (214) → ENTROPY CODING UNIT (215) → TIMESTAMP CALCULATING UNIT (216) → PACKETIZING UNIT (217) → PACKETS

MIDTERM CALCULATION BUFFER UNIT (212)

COEFFICIENT SORTING BUFFER UNIT (213)

112

EP 2 437 493 A1

# FIG. 11

| | | | |
|---|---|---|---|
| 0LL | 1HL | 2HL | 3HL |
| 1LH | 1HH | | |
| 2LH | | 2HH | |
| 3LH | | 3HH | |

DIVISON LEVEL = 3
(H: HIGH FREQUENCY, L: LOW FREQUENCY)

EP 2 437 493 A1

# FIG. 12

A

DIVISON LEVEL = 1

B

DIVISON LEVEL = 3

41

# FIG. 13

EP 2 437 493 A1

# FIG. 14

A    IMAGE INPUT

B    WAVELET TRANSFORM RESULTS (ANALYZING)

C    IMAGE OUTPUT

FIG. 15

# FIG. 16

( ENCODING PROCESSING START )

SET NUMBER A OF PRECINCT TO BE PROCESSED TO INITIAL VALUE — S201

OBTAIN IMAGE DATA OF NUMBER OF LINES NECESSARY FOR GENERATING A'TH ONE LINE FROM TOP AT LOWERMOST FREQUENCY BAND — S202

PERFORM VERTICAL ANALYZING FILTERING — S203

PERFORM HORIZONTAL ANALYZING FILTERING — S204

NO ⟨ HAS FILTERING ENDED TO FINAL LEVEL? ⟩ S205

YES

SORT COEFFICIENTS OF PRECINCT A IN ORDER FROM LOW FREQUENCY TO HIGH FREQUENCY — S206

PERFORM ENTROPY ENCODING FOR EACH LINE — S207

CALCULATE TIMESTAMP — S208

PACKETIZING — S209

TRANSMIT PACKETS — S210

INCREMENT THE VALUE OF A TO SET THE NEXT PRECINCT TO PROCESSING OBJECT — S211

YES ⟨ IS THERE ANY UNPROCESSED IMAGE INPUT LINE? ⟩ S212

NO

( END )

# FIG. 17

```
        ┌────────────────────────────────────────┐
        │       DECODING PROCESSING START        │
        └────────────────────────────────────────┘
                           │
   ┌─────────▶────────────┐│
   │                      ▼
   │       ┌────────────────────────────────┐  S231
   │       │      OBTAIN ENCODED DATA        │
   │       └────────────────────────────────┘
   │                      │
   │                      ▼
   │       ┌────────────────────────────────┐  S232
   │       │  SUBJECT ENCODED DATA TO        │
   │       │  ENTROPY ENCODING FOR EACH LINE │
   │       └────────────────────────────────┘
   │                      │
   │                      ▼
   │       ┌────────────────────────────────┐  S233
   │       │        HOLD COEFFICIENT         │
   │       └────────────────────────────────┘
   │                      │
   │         NO           ▼                       S234
   │◀───────────< HAVE ONE PRECINCT WORTH OF  >
   │              COEFFICIENTS BEEN ACCUMULATED? > NO
   │                      │ YES
   │                      ▼
   │       ┌────────────────────────────────┐  S235
   │       │       READ OUT COEFFICIENTS     │
   │       └────────────────────────────────┘
   │     ┌───────▶──────────┐│
   │     │                  ▼
   │     │  ┌────────────────────────────────┐  S236
   │     │  │ PERFORM VERTICAL SYNTHESIZING FILTERING │
   │     │  └────────────────────────────────┘
   │     │                  │
   │     │                  ▼
   │     │  ┌────────────────────────────────┐  S237
   │     │  │ PERFORM HORIZONTAL SYNTHESIZING FILTERING │
   │     │  └────────────────────────────────┘
   │     │        NO        │                     S238
   │     └──────< HAS PROCESSING ENDED TO LEVEL 1? >
   │                        │ YES
   │                        ▼
   │       ┌────────────────────────────────┐  S239
   │       │ OUTPUT IMAGE DATA AT PLAYBACK POINT-IN-TIME │
   │       └────────────────────────────────┘
   │           YES          │                     S240
   └──────────< END OF PROCESSING? >
                            │ NO
                            ▼
                   ┌────────────────┐
                   │       END      │
                   └────────────────┘
```

# FIG. 18

EP 2 437 493 A1

## FIG. 19

EP 2 437 493 A1

# FIG. 20

```
┌────────────────────────────────────────┐
│    TRANSMISSION PROCESSING START       │
└────────────────────────────────────────┘
                    │
                    ▼
        ┌──────────────────────┐  S321
        │    CAPTURE IMAGE     │
        └──────────────────────┘
                    │
                    ▼
        ┌──────────────────────┐  S322
        │  ENCODE IMAGE DATA   │
        └──────────────────────┘
                    │
                    ▼
        ┌──────────────────────┐  S323
        │  CALCULATE TIMESTAMP │
        └──────────────────────┘
                    │
                    ▼
        ┌──────────────────────┐  S324
        │ PACKETIZE ENCODED DATA│
        └──────────────────────┘
                    │
                    ▼
        ┌──────────────────────┐  S325
        │  CONVERT FRAME RATE  │
        └──────────────────────┘
                    │
                    ▼
        ┌──────────────────────────┐  S326
        │ ADD FRAME RATE INFORMATION│
        └──────────────────────────┘
                    │
                    ▼
        ┌──────────────────────────┐  S327
        │ SMOOTH TRANSMISSION RATE │
        └──────────────────────────┘
                    │
                    ▼
        ┌──────────────────────┐  S328
        │   TRANSMIT PACKETS   │
        └──────────────────────┘
                    │
                    ▼
              ┌───────────┐
              │    END    │
              └───────────┘
```

# FIG. 21

DBP: Defined by Profile. SET TO 0

LEN: Length. SET TO 1

Transmission Frame Rate (TFR):

   SET TRANSMISSION FRAME RATE f_t(fps) INFORMATION OF ENCODED DATA INCLUDED IN PACKETS

   SET f_t x 1000 TO A VALUE WITH BELOW DECIMAL POINT BEING TRUNCATED

# FIG. 22

```
┌─────────────────────────────────────┐
│    RECEPTION PROCESSING START        │
└─────────────────────────────────────┘
                  │
                  ▼
        ┌──────────────────────┐  S341
        │   RECEIVE PACKETS     │
        └──────────────────────┘
                  │
                  ▼
        ┌──────────────────────┐  S342
        │     HOLD IMAGE        │
        └──────────────────────┘
                  │
                  ▼
        ┌──────────────────────┐  S343
        │  DETERMINE PLAYBACK   │
        │  POINT-IN-TIME BASED ON│
        │ FRAME RATE AND TIMESTAMP│
        └──────────────────────┘
                  │
                  ▼
        ┌──────────────────────┐  S344
        │  DECODE ENCODED DATA  │
        └──────────────────────┘
                  │
                  ▼
        ┌──────────────────────┐  S345
        │   PLAY IMAGE DATA AT   │
        │ PLAYBACK POINT-IN-TIME │
        └──────────────────────┘
                  │
                  ▼
             ┌─────────┐
             │   END   │
             └─────────┘
```

# FIG. 23

EP 2 437 493 A1

# FIG. 24

# FIG. 25

```
┌─────────────────────────────────────────┐
( TRANSMISSION PROCESSING START           )
└─────────────────────────────────────────┘
                    │
                    ▼
        ┌───────────────────────┐ S421
        │    CAPTURE IMAGE       │
        └───────────────────────┘
                    │
                    ▼
        ┌───────────────────────┐ S422
        │  ENCODE IMAGE DATA     │
        └───────────────────────┘
                    │
                    ▼
        ┌───────────────────────┐ S423
        │  CALCULATE TIMESTAMP   │
        └───────────────────────┘
                    │
                    ▼
        ┌───────────────────────┐ S424
        │ PACKETIZE ENCODED DATA │
        └───────────────────────┘
                    │
                    ▼
        ┌───────────────────────┐ S425
        │  CONVERT FRAME RATE    │
        └───────────────────────┘
                    │
                    ▼
        ┌───────────────────────┐ S426
        │  ADD FRAME SKIP COUNT  │
        └───────────────────────┘
                    │
                    ▼
        ┌───────────────────────┐ S427
        │ SMOOTH TRANSMISSION RATE│
        └───────────────────────┘
                    │
                    ▼
        ┌───────────────────────┐ S428
        │   TRANSMIT PACKETS     │
        └───────────────────────┘
                    │
                    ▼
             (    END    )
```

# FIG. 26

```
   0                      1                      2                      3
   0 1 2 3 4 5 6 7 8 9 0 1 2 3 4 5 6 7 8 9 0 1 2 3 4 5 6 7 8 9 0 1
```

| DBP = 0 | LEN = 1 |
|---|---|
| Num of Skip Frame | |

DBP: Defined by Profile.  SET TO 0
LEN: Length.  SET TO 1
Num of Skip Frame (NSF):
    SET TO FRAME SKIP COUNT INFORMATION

# FIG. 27

```
        ┌─────────────────────────────────────┐
        │    RECEPTION PROCESSING START        │
        └─────────────────────────────────────┘
                          │
                          ▼
        ┌─────────────────────────────────────┐  S441
        │         RECEIVE PACKETS             │
        └─────────────────────────────────────┘
                          │
                          ▼
        ┌─────────────────────────────────────┐  S442
        │          HOLD PACKETS               │
        └─────────────────────────────────────┘
                          │
                          ▼
        ┌─────────────────────────────────────┐  S443
        │      DETERMINE PLAYBACK             │
        │ POINT-IN-TIME BASED ON FRAME SKIP   │
        │ COUNT, FRAME RATE, AND TIMESTAMP    │
        └─────────────────────────────────────┘
                          │
                          ▼
        ┌─────────────────────────────────────┐  S444
        │       DECODE ENCODED DATA           │
        └─────────────────────────────────────┘
                          │
                          ▼
        ┌─────────────────────────────────────┐  S445
        │       PLAY IMAGE DATA AT            │
        │     PLAYBACK POINT-IN-TIME          │
        └─────────────────────────────────────┘
                          │
                          ▼
                   ┌─────────────┐
                   │     END     │
                   └─────────────┘
```

FIG. 28

A  CAPTURE & CODEC

B  FRAME RATE CONVERSION PROCESSING OUTPUT BY TRANSMISSION DEVICE

C  TRANSMISSION BY TRANSMISSION DEVICE

D  RECEPTION BY RECEPTION DEVICE

E  PLAYBACK BY RECEPTION DEVICE

$F\_t = F\_s$ (fps)

$F\_t = F\_s/3$ (fps)

FRAME RATE CONVERSION PROCESSING (THINNING-OUT PROCESSING)

PLAYBACK BY CHANGING PLAYBACK POINT-IN-TIME AS TO TIMESTAMP FROM FRAME SKIP COUNT

TIME

F : Frame ID
TS : Timestamp

## FIG. 29

<div align="center">

**INTERNATIONAL SEARCH REPORT**

</div>

| | International application No. |
|---|---|
| | PCT/JP2010/058422 |

**A. CLASSIFICATION OF SUBJECT MATTER**
*H04N7/173*(2006.01)i, *H04N7/01*(2006.01)i, *H04N7/26*(2006.01)i

According to International Patent Classification (IPC) or to both national classification and IPC

**B. FIELDS SEARCHED**

Minimum documentation searched (classification system followed by classification symbols)
H04N7/173, H04N7/01, H04N7/26

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2003-304502 A (Matsushita Electric Industrial Co., Ltd.),<br>24 October 2003 (24.10.2003),<br>paragraphs [0064] to [0085]; fig. 1, 3<br>(Family: none) | 1,3,6<br>2,4,5,7-14 |
| A | JP 2002-238050 A (Matsushita Electric Industrial Co., Ltd.),<br>23 August 2002 (23.08.2002),<br>entire text; all drawings<br>& US 2002/0071654 A1    & EP 1217839 A2<br>& CN 1366271 A | 1-14 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    16 August, 2010 (16.08.10) | Date of mailing of the international search report<br>    24 August, 2010 (24.08.10) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/058422

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-229593 A  (Samsung Electronics Co., Ltd.),<br>25 August 2005 (25.08.2005),<br>entire text; all drawings<br>& US 2005/0190872 A1    & EP 1585336 A1<br>& KR 10-2005-0081554 A   & CN 1655619 A | 1-14 |
| A | JP 2007-89137 A  (Sharp Corp.),<br>05 April 2007 (05.04.2007),<br>entire text; all drawings<br>& US 2007/0067480 A1    & WO 2007/035705 A2 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007311924 A